(19) **Europäisches Patentamt**

**European Patent Office**

**Office européen des brevets**

(11) **EP 1 079 366 B1**

(12) **EUROPEAN PATENT SPECIFICATION**

(45) Date of publication and mention
of the grant of the patent:
**28.07.2004 Bulletin 2004/31**

(51) Int Cl.$^7$: **G09G 5/399**, G09G 5/14,
G09G 1/16

(21) Application number: **00117544.7**

(22) Date of filing: **14.08.2000**

(54) **Graphics processing apparatus**

Gerät zur Verarbeitung von Grafikdaten

Appareil de traitement de données graphiques

(84) Designated Contracting States:
**DE FR GB**

(30) Priority: **20.08.1999 JP 23480799**

(43) Date of publication of application:
**28.02.2001 Bulletin 2001/09**

(73) Proprietor: **NEC Electronics Corporation
Kawasaki, Kanagawa 211-8668 (JP)**

(72) Inventor: **Mizutani, Kenichi,
NEC IC Microcomputer Systems
Kawasaki-shi, Kanagawa (JP)**

(74) Representative:
**von Samson-Himmelstjerna, Friedrich R.,
Dipl.-Phys. et al
SAMSON & PARTNER
Widenmayerstrasse 5
80538 München (DE)**

(56) References cited:
**EP-A- 0 524 461**          US-A- 4 360 831
**US-A- 5 748 174**

## Description

## Background of the Invention

1. Field of the Invention

The present invention relates to a graphics processing apparatus and method.

2. Description of the Related Art

A graphics process is carried out by a general purpose computer or an exclusive use graphics engine. Especially, in a superposing process of a plurality of images through a semitransparent process, system reset is carried out, various values are set and a sync signal is generated. Then, an initializing process, a storage process, and a display process are carried out in order. First, in the initializing process, all image buffers are cleared to an empty state to allow them to store the images as the object of the superposing process.

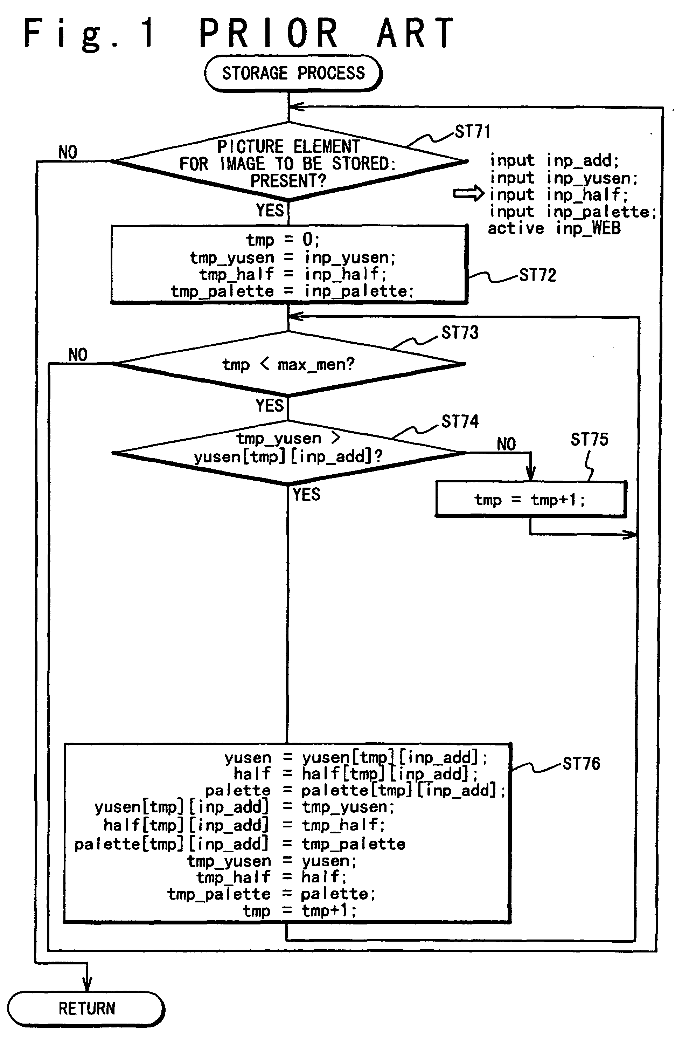

Fig. 1 is a flow chart showing a storage process in case of a conventional graphics process. In the storage process, first, it is determined whether or not there is a picture element (dot data) for the image to be stored in an image buffer (Step ST71). This is because there is a case that a plurality of picture elements exist for the images to be stored. Here, a CPU 11 determines whether or not there is remained any picture element to which the process of the steps ST72 to ST76 to be mentioned later is not yet carried out. If there is no picture element for the image to be stored, the storage process is ended. Then, the control operation advances to the display process.

When there is a picture element for the image to be stored, "0" is substituted for a variable tmp indicative of the number of a processing plane as an initial value to select the image buffer on the most front side. Also, an inputted display priority level value inp_yusen is substituted for a variable tmp_yusen indicative of a display priority level value. An inputted semitransparent value inp_half is substituted for a variable tmp_half indicative of a semitransparent value. Also, an inputted palette address value inp_palette is substituted for a variable tmp_palette indicative of a palette address value (Step ST72).

Next, it is determined whether or not the variable tmp indicative of the number of the currently processed plane is equal to or larger than a maximum number of planes max_men (Step ST73). When the variable tmp indicative of the number of the currently processed plane is determined not to equal to or larger than the maximum number of planes max_men, it is determined whether or not the temporary variable tmp_yusen indicative of the display priority level is larger than the display priority level yusen[tmp][inp_add] stored in the image buffer. That is, it is determined whether or not the temporary priority level is higher than the display priority level yusen[tmp][inp_add] (Step ST74).

When it is determined that the temporary variable tmp_yusen indicative of the display priority level is not larger than the display priority level yusen[tmp][inp_add] stored in the image buffer, "1" is added to the value of the temporary variable tmp indicative of the number of the currently processed plane (Step ST75). Then, the control operation returns to the process of the step ST73.

When it is determined that the temporary variable tmp_yusen indicative of the display priority level is larger than the display priority level yusen[tmp][inp_add] stored in the image buffer, the image data is stored in the image buffer. That is, the value of the variable yusen[tmp][inp_add] is substituted for the variable yusen, and the value of the variable half[tmp][inp_add] is substituted for the variable half. Also, the value of the variable palette [tmp] [inp_add] is substituted for the variable palette, and the value of the variable tmp_yusen is substituted for the variable yusen[tmp][inp_add]. The value of the variable tmp_half is substituted for variable half[tmp][inp_add], and the value of the variable tmp_palette is substituted for the variable palette [tmp] [inp_add]. The value of the variable yusen is substituted for the variable tmp_yusen, and the value of the variable half is substituted for the variable tmp_half, and the value of variable palette is substituted for the variable tmp_palette. Moreover, the value of the variable tmp indicative of the current number of processing planes is incremented by "1" (Step ST76). After that, the control operation returns to the process of step ST73.

On the other hand, when it is determined at the step ST73 that the variable tmp indicative of the number of the currently processed plane is equal to or larger than the maximum number of planes max_men, the control operation returns to the process of the step ST71. After that, when it is determined that there is any picture element for the image to be stored, that is, when the determination result at the step ST71 is No, the storage process is ended. Then, the control operation advances to the display process.

Through the storage process described above, the image data are stored in the image buffers in order from the front image buffer. However, in the conventional graphics process, the images of the more rear planes than the plane corresponding to the number of image buffers are never stored in the image buffers.

Next, when the storage process ends, the display process is carried out. A semitransparent process is carried out to the images for the number of image buffers sequentially from the most front one of the images stored in the image buffers. Thus, the display image which should be displayed on the display unit is generated.

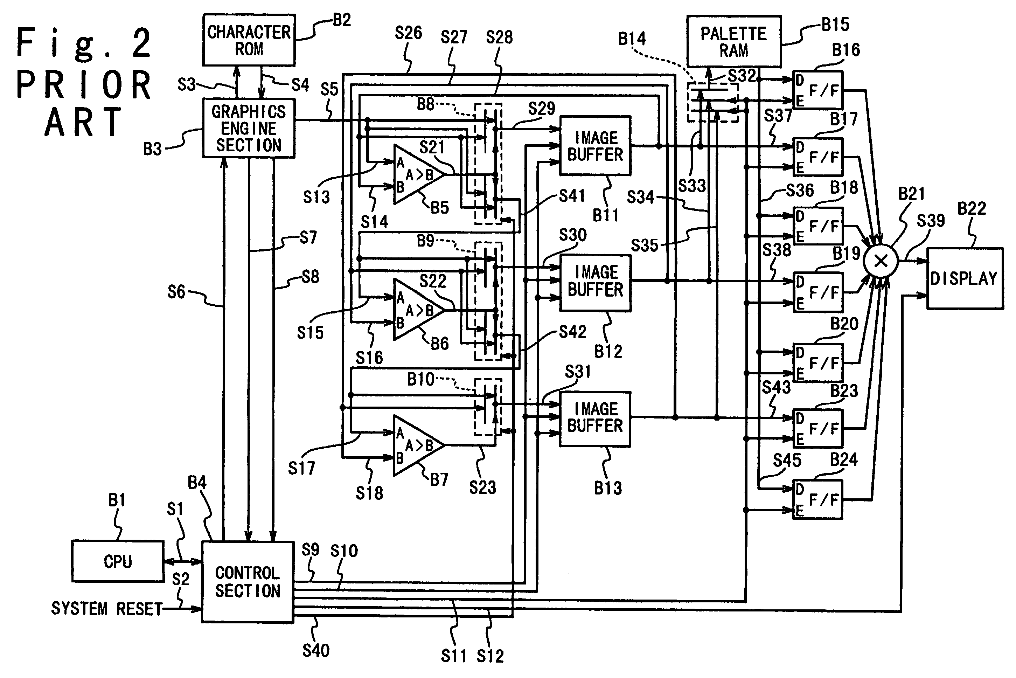

It should be noted that the graphics engine may be realized to carry out the above conventional graphics process with the exclusive use hardware. The graphics engine may be realized as shown in Fig. 2, for example. This graphics engine has three image buffers B11 to B13. A control section B4 controls each section in the graphics engine in response to a request from a CPU B1, and carries out other processes in conjunction with the graphics process. A graphics engine section B3 outputs data such as the image data which should be stored in the image buffers B11 to B13 in accordance with a control signal from the control section B4. A $\alpha$ blending calculating unit B21 carries out calculation between color data, and supplies the calculated color data to an external display unit B22.

When the graphics process is carried out by the graphics engine, first, a system reset signal S2 is made active so taht the control section B4 is reset. Next, a CPU_I/F signal S1 is outputted from the CPU B1 to the control section B4. The various types of setting are carried out to the control section B4 as shown in the step ST71. Moreover, a sync signal S12 is outputted from the control section B4 to the display unit B22. Thus, the initializing process is carried out.

Data indicative of an empty state is set to all of variables palette [i][j], yusen[i][j], and half[i][j] which are provided for each of the image buffers B11 to B13, in the initializing process to show the state in which storage contents in the image buffers B11 to B13 are cleared. At this time, the same storage process as the process shown in the flow chart of Fig. 1 is carried out.

In the storage process, the control section B4 outputs an engine control signal S6 to the graphics engine section B3 as parameters necessary for drawing to be displayed in accordance with the CPU_I/F signal S1 which has been outputted from the CPU B1. The graphics engine section B3 calculates a ROM address S3 based on the parameters supplied with the engine control signal S6 to output to a character ROM B2. The character ROM B2 returns a ROM data S4 to the graphics engine section B3 in accordance with the ROM address S3 from the graphics engine section B3.

The graphics engine section B3 outputs the image S5 to the image buffers B11 to B13 in order in order in accordance with the set values on the start of the graphics process and the returned ROM data S4. At the same time, the graphics engine section B3 outputs engine output image WEB S7 and an engine output image address S8 to the control section B4. Here, the image S5 is the data, which is composed of the values of the three variables of palette, yusen, and half.

Next, a comparator B5 compares the variable yusen which is contained in the image S5, and the variable yusen which is contained in the image buffer output signal S28 which has been outputted from the image buffer B11. Then, the comparator B5 outputs a priority changing signal S21 in accordance with the comparing result. A demultiplexer B8 outputs to the image buffer B11, one with a higher priority level of the image S5 and the image buffer output signal S28 as an image buffer input signal S29 in accordance with the priority changing signal S21. The image buffer B11 stores the image buffer input signal S29. Also, the demultiplexer B8 outputs to the next comparator B6, the other with the lower priority level of them as the next image buffer comparison data S41.

Next, the comparator B6 compares the variable yusen which is contained in the next image buffer comparison data S41 and the variable yusen which is contained in the image buffer output signal S27 which has been outputted from the image buffer B12. Then, the comparator B6 outputs a priority changing signal S22 in accordance with the comparing result. A demultiplexer B9 outputs to the image buffer B12, one with the higher priority level of the next image buffer comparison data S41 and the image buffer output signal S27 as an image buffer input signal S30 in accordance with the priority changing signal S22. In this case, the image buffer B12 stores the image buffer input signal S30. Also, the demultiplexer B9 outputs the other having the lower priority level to the comparator B7 as a next image buffer comparison data S42.

Next, the comparator B7 compares the variable yusen which is contained in the next image buffer comparison data S42 and the variable yusen which is contained in the image buffer output signal S26 which has been outputted from image buffer B13. Then, the comparator B7 outputs a priority changing signal S23 in accordance with the comparing result. A demultiplexer B10 outputs the next image buffer comparison data S42 as the image buffer input signal S31 to the image buffer B13 in accordance with the priority changing signal S23, when the next image buffer comparison data S42 is higher in the priority level. Otherwise, the demultiplexer B10 stores the image buffer output signal S26 in the image buffer B13 again. The above operation is repeated to all the picture elements and the images of all planes.

After that, when the storage process ends, the display process is carried out. The color data S39 which has been calculated by the $\alpha$ blending calculating unit B22 is outputted to the display unit B22. As a result, the three images stored in the image buffers B11 to B13 are subjected to a semitransparent process and then are displayed on the display unit B22.

By the way, when semitransparent images are superposed and displayed in the above-mentioned conventional graphics process, there is a problem that a large difference is present between an original color as an ideal color and the displayed color, as described below.

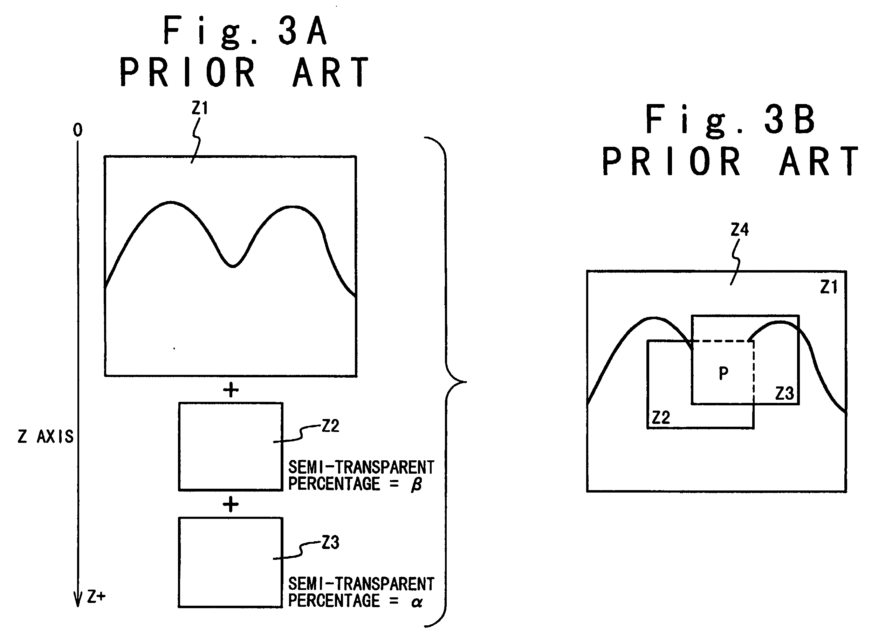

Figs. 3A and 3B are diagrams showing the color of the semitransparent images which are actually displayed on the display unit in the conventional graphics process, when the semitransparent images are superposed and displayed. In this example, it is supposed that the images which should be superposed and displayed are three of Z1, Z2, and Z3 in order from the rear side. Also, it is supposed that their semitransparent percentage values are $\gamma$, $\beta$ and $\alpha$. Further, it is supposed that the semitransparent percentage $\beta$ is sufficiently

smaller than the semitransparent percentage γ and is near "0". Also, it is supposed that the image buffers which should be stored these images is only two.

In this case, the color color_P of the original image in the P point shown in the figure is determined to be expressed by the following equation 1.

$$\text{color\_P}$$

$$= \alpha \ \text{color\_Z3}$$

$$+ (1-\alpha) \ (\beta \ \text{color\_Z2} + (1-\beta) \ \gamma \ \text{color\_Z1}) \qquad (1)$$

where color_Z* is a color at the P point of image Z*.

However, in the graphics process, because there are only two of the image buffers, it is Z3 and Z2 of the images from the front side that can be stored in the image buffers. Then, the color color_P'' of the image Z4 at the P point which is actually displayed on the display unit is determined by the following equation (2).

$$\text{color\_P''}$$

$$= \alpha \ \text{color\_Z3} + (1-\alpha) \ \beta \ \text{color\_Z2} \qquad (2)$$

In the case, an error of $(1-\alpha)((1-\beta)\gamma \ \text{color\_Z1})$ is generated between the color which should be originally displayed and the displayed color by. At this time, because $\beta \fallingdotseq 0$, the error takes a sufficiently large value. In this way, in the conventional graphics process, there is a problem that the large error is generated between the color color_P'' in the P point of the image which is actually displayed on the display unit and the color color_P which should be originally displayed.

In conjunction with the above description, an image display apparatus is disclosed in Japanese Laid Open Patent Application (JP-A-Heisei 4-256999). In this reference, the density values of superposed image regions are added in units of picture elements. Then, the added value is multiplied by (the number of times of superposition)$^{-1}$ to produce a synthetic image. Instead, the superposed images are multiplied by a contribution factor, respectively, and synthesized. Otherwise, the density of picture elements in the each of the superposed images is adjusted in accordance with the contribution factor, and then the adjusted images are synthesized.

Also, an image processing apparatus is disclosed in Japanese Laid Open Patent Application (JP-A-Heisei 7-104733). In this reference, a plurality of image data are processed in the order in a time divisional manner based on their priority levels. Thus, a multiple mixing process to these image data is realized. Also, a transparent process is carried out based on a transparent data bit which is contained in each image data. The image display apparatus is composed of data selectors (65) and (72) which select an image data to be inputted.

A priority chromakey control circuit (96) drives the selectors (65) and (72) based on the priority levels. A special image process calculating unit (75) carries out an operation between the output of data selectors (65) and (72) and the output of a time division data latch (74). A coefficient register 130 gives the special image process calculating unit (75) coefficients. A picture element data latch (76) finally holds the output of the special image process calculating unit 75. In this way, the multiple semitransparent process can be simply realized with one calculating unit. Also, an image control system is disclosed in Japanese Laid Open Patent Application (JP-A-Heisei 8-272944). In this reference, an α/β selector 80 separates a plurality of planes supplied from a generator section (42) to (44) into an α system and a β system. A controller (61) forms a superposed display in accordance with the priority levels specified for every α system and β system. A CLT (62) converts each of the superposed display for every α system and β system into the display data representing a color in units of picture elements. A selecting section (70) to (75) selects the output of at least one of the display data of the α system and β system, just as it is, or the output of the display data of a predetermined one of the α system and the β system in place of the color data indicating a specific color. A calculating section (78) adds the display data of the α system and the β system outputted through the selecting section to generate a semitransparent display.

Further, EP-A-0 524 461 discloses a method and apparatus for implementing a raster graphic display video data path that provides arbitrary mixing of a plurality of images. More specifically, a method and graphic processing apparatus is disclosed, comprising: N (N being i.e. at least four) image buffers; a selection section which selects (N-1) images as (m-1) of N storage images from among n images based on priority levels respectively allocated to said n images and then one image as the last one of said m storage images from among said n images other than said (N-1) images based on said priority levels and a threshold value for a semitransparent value. The system assigns image data from N sources data to N hierarchically ordered frame buffers based on N priority levels, wherein the source for the Nth frame buffer is selected based on the non-existence of an indication of pixel translucency, said image is not transparent when said image has the highest semitransparent value (only for alpha equal to zero the pixel is considered transparent); and a display driving section reads out said N images from said N image buffers in units of picture elements to produce a display image and drives said display unit such that said display image is displayed.

**Summary of the Invention**

Therefore, an object of the present invention is to provide a graphics processing apparatus and method in which an error from an original color which should be displayed can be made small, in particular when semitransparent drawings are superposed and displayed.

According to an aspect of the present invention, a graphic processing apparatus comprises:

m (m is an integer of more than 1) image buffers;
a display unit comprising X dots;
a graphics engine section, which outputs n images, n being an integer bigger than m, each image comprising color data for a plurality of dots of the display unit, a priority level value, and a semitransparent value;
a selecting section which

- selects (m-1) storage images as (m-1) of m storage images with the highest priority level value up to the (m-1)th highest priority level from among said n images,
- selects an mth image of said m storage images from among said n images other than said (m-1) images, wherein said mth image is the image with the mth highest priority value, unless the semitransparent value of the image with the m+1th highest priority level is above a threshold value, in which case the mth image is the image with the m+1th highest priority level,
- and finally stores the color data of said m storage images in said m image buffers,

a display driving section which reads out the color data of said m images from said m image buffers in units of dots to produce a display image and drives said display unit such that said display image is displayed.

Here, the selecting section stores the m storage images in the m image buffers in order of the priority levels. In this case, the selecting section stores one with a first priority level of the m storage images in a first one of the m image buffers. Then, the selecting section shifts the one storage image to a second one of the m image buffers and then stores a next one with a second priority level in the first image buffer, when the next one storage image is selected, the second priority level being higher than the first priority level.

Also, the graphics processing apparatus may further include a threshold value storage section which stores the threshold value. The threshold value is the highest one of the semitransparent values of ones for a predetermined number of the n images. The selecting section reads out the threshold value from the threshold value storage section. In this case, the graphics processing apparatus may further include a threshold value determining section which determines the threshold value prior to the selection by the selecting section, and stores the determined threshold value in the threshold value storage section.

In addition to the above, it is desirable that the threshold value is equal to or larger than a preset value. The graphics processing apparatus may further include a threshold value determining section which determines the threshold value prior to the selection by the selecting section, and stores the determined threshold value in the threshold value storage section.

Also, the selecting section may include a determining section which determines whether a concerned image of the n images other than the (m-1) images has the semitransparent value equal to or larger than the threshold value, and selects the concerned image as the last one of the m storage images when the concerned image has the semitransparent value equal to or larger than the threshold value. In this case, the threshold value is a multiplication of a difference between the highest value and the semitransparent value of the concerned image and the semitransparent value of each of the storage images already stored in the image buffers. Also, the determining section further determines whether the semitransparent value of the concerned image is equal to or larger than a preset value, and selects the concerned image as the last one of the m storage images when the concerned image has the semitransparent value equal to or larger than the preset value.

According to another aspect of the present invention, a method of displaying a display image on a display unit comprising dots, comprises the steps of:

receiving n images, wherein n, m are integers with n being bigger than m, and m being bigger than 1, each image comprising color data for a plurality of dots of the display unit, a priority level value, and a semitransparent value,
selecting (m-1) storage images as (m-1) of m storage images with the highest priority level value up to the (m-1)th highest priority level from among said n images, to store in (m-1) of m image buffers,
selecting an mth image of said m storage images from among said n images other than said (m-1) images, wherein said mth image is the image with the mth highest priority value, unless the semitransparent value of the image with the m+1th highest priority level is above a threshold value, in which case the mth image is the image with the m+1th highest priority level, to store in the remaining one of said m image buffers,
storing the color data of said m storage images in said m image buffers,
reading out the color data of said m images from said m image buffers in units of dots to produce a display image, and
driving said display unit such that said display image is displayed.

Here, the selecting (m-1) images may include storing the m storage images in the m image buffers in order of the priority levels. In this case, the selecting (m-1) images is attained by comparing the priority level of one with a first priority level of the m storage images which is stored in a first one of the m image buffers and the priority level of a next one with a second priority level; by shifting the one storage image to a second one of the m image buffers when the next one storage image has the second priority level higher than the first priority level; and by storing the next image with the second priority level in the first image buffer.

Also, the method may further include determining the threshold value which is the highest one of the semitransparent values of ones for a predetermined number of the n images. In this case, the determining the threshold value may be carried out prior to the selecting the m images.

Also, the determining the threshold value may be attained by determining the threshold value when the threshold value is equal to or larger than a preset value. In this case, the determining the threshold value may be carried out prior to the selecting the m images.

Also, the selecting one image may be attained by checking whether a concerned image of the n images other than the (m-1) images has the semitransparent value equal to or larger than the threshold value; and by selecting the concerned image as the last one of the m storage images when the concerned image has the semitransparent value equal to or larger than the threshold value. In this case, the threshold value may be a multiplication of a difference between the highest value and the semitransparent value of the concerned image and the semitransparent value of each of the storage images already stored in the image buffers. Also, the checking may be attained by determining whether the semitransparent value of the concerned image is equal to or larger than a preset value; and by selecting the concerned image as the last one of the m storage images when the concerned image has the semitransparent value equal to or larger than the preset value.

In still another aspect of the present invention, a recording medium is provided in which a program is recorded which is adapted to perform all the steps of the method of displaying a display image on a display unit according to the attached claim 11.

**Brief Description of the Drawings**

Fig. 1 is a flow chart showing a storage process in a conventional example;
Fig. 2 is a block diagram showing the structure of a graphics engine which realizes the graphics process in the conventional example;
Figs. 3A and 3B are diagrams showing the graphics process in the conventional example;
Fig. 4 is a block diagram showing the structure of a computer system which is applied to a first embodiment of the present invention;
Fig. 5 is a flow chart showing a threshold value producing process which is carried out before a graphics process in the first embodiment of the present invention;
Fig. 6 is a flow chart showing a graphics process in the first embodiment of the present invention;
Fig. 7 is a flow chart showing an initializing process shown in Fig. 6 in detail;
Fig. 8 is a flow chart showing a storage process of Fig. 6 in detail;
Fig. 9 is a flow chart showing a display process of Fig. 6 in detail;
Figs. 10A and 10B are diagrams showing the graphics process in the first embodiment of the present invention;
Fig. 11 is a block diagram showing the structure of a graphics engine which realizes the graphics process in the first embodiment of the present invention;
Fig. 12 is a flow chart showing a storage process in a second embodiment of the present invention;
Fig. 13 is a block diagram showing the structure of a graphics engine which realizes the graphics process in the second embodiment of the present invention; and
Figs. 14A and 14B are block diagrams showing the structures of computer systems as modification examples of the embodiments of the present invention.

**Description of the Preferred Embodiments**

Hereinafter, a graphics processing apparatus of the present invention will be described with reference to the attached drawings.

In the following description of the preferred embodiments the following annotations and definitions are made: The term picture element is equivalent to dot data. The term color data describes an item comprising the color values for all the dots of an image. The term parameter data is used to describe an item comprising the parameter values like priority level, semitransparency value, etc. of an image. The term image is used for describing an item comprising the color data, and the parameter data. The term display image describes a set of one color values for each dot of the display unit. The term storage image describes those images which are stored in the image buffers.

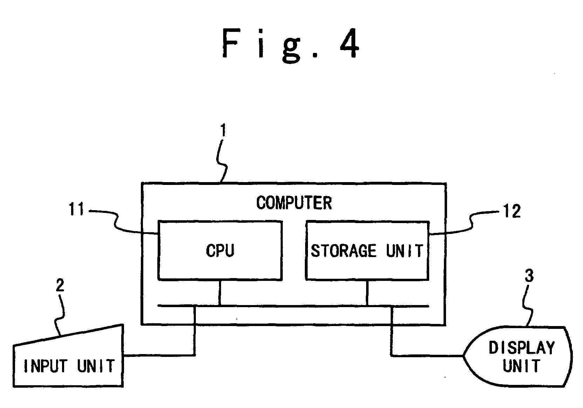

Fig. 4 is a block diagram showing the structure of a general computer system which is applied to the graphics process according to the first embodiment of the present invention. As illustrated, the computer system is composed of a computer 1 which is composed of a CPU (Central Processing Unit) 11 and a storage unit 12, an input unit 2 and a display unit 3.

The CPU 11 carries out the graphics process in the first embodiment based on a program shown in the flow chart to be mentioned later. The storage unit 12 stores the program to be carried out by the CPU 11 and other data, and is used as a work area of the CPU 11. The input unit 2 is used to input data and to input an instruction for the CPU 11. The display unit 3 displays the images to which the graphics process is carried out by the CPU 11.

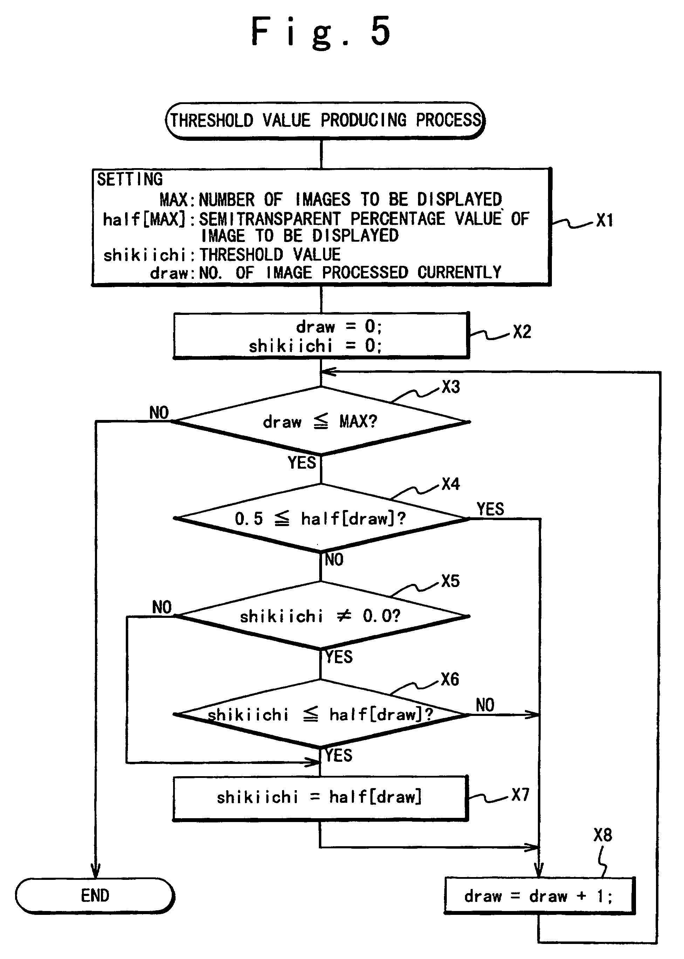

Hereinafter, the graphics process according to the first embodiment will be described. In the first embodiment, a variable shikiichi needs to be produced in a threshold value producing process shown in the flow chart of Fig. 5 prior to the graphics process. The threshold value producing process is started in response to the input of a predetermined instruction from input unit 2.

In the threshold value producing process, the CPU 11 first carries out the setting and definition of various parameters. In this case, the number of displayed images as the object to superposed in the semitransparent process is set to a variable MAX. Also, the semitransparent value of the displayed image is set to a variable half[MAX], and a threshold value thereof is set to the variable shikiichi. The number of the currently processed image is set to a variable draw (Step X1). Next, the CPU 11 initializes the value of the number of the currently processed image draw and the threshold value shikiichi to "0" (Step X2).

Next, the CPU 11 determines whether or not the maximum number MAX of images to be displayed is equal to or larger than the number draw of the currently processed image (Step X3). When it is determined that the number MAX of the images to be displayed is equal to or larger than the number draw of the currently processed image, the CPU 11 determines whether or not the semitransparent value half[draw] of the currently processed image is equal to or more than 0.5 (Step X4).

When it determined that the semitransparent value half[draw] of the currently processed image is determined to be less than 0.5, the CPU 11 determines whether or not the threshold value shikiichi is not equal to 0.0 (Step X5). When the threshold value shikiichi is determined to be equal to 0.0, the control operation advances to the process of step X7. When the threshold value shikiichi is determined to be not equal to 0.0, the CPU 11 further determines whether or not the threshold value shikiichi is smaller than the semitransparent value half[draw] of the currently processed image (Step X6).

When it is determined at the step X5 that the threshold value shikiichi is equal to 0.0, or when it is determined at the step X6 that the threshold value shikiichi is smaller than the semitransparent value half[draw] of the currently processed image, the step X7 is carried out. At the step X7, the CPU 11 substitutes the semitransparent value half[draw] of the currently processed image for the threshold value shikiichi (Step X7). After that, the control operation advances to the process of a step X8.

On the other hand, when it is determined at the step X4 that the semitransparent value half[draw] of the currently processed image equal to or larger than 0.5, and when it is determined at the step X6 that the threshold value shikiichi is equal to or larger than the semitransparent value half[draw] of the currently processed image, the control operation advances to the process of the step X8. At the step X8, the CPU 11 increments the number draw of the currently processed image by "1", and determines the next image as the object of the process. Then, the control operation returns to the process of the step X3.

After that, when it is determined at the step X3 that the number draw of the currently processed image is equal to or larger than the number MAX of images to be displayed, the threshold value producing process is ended.

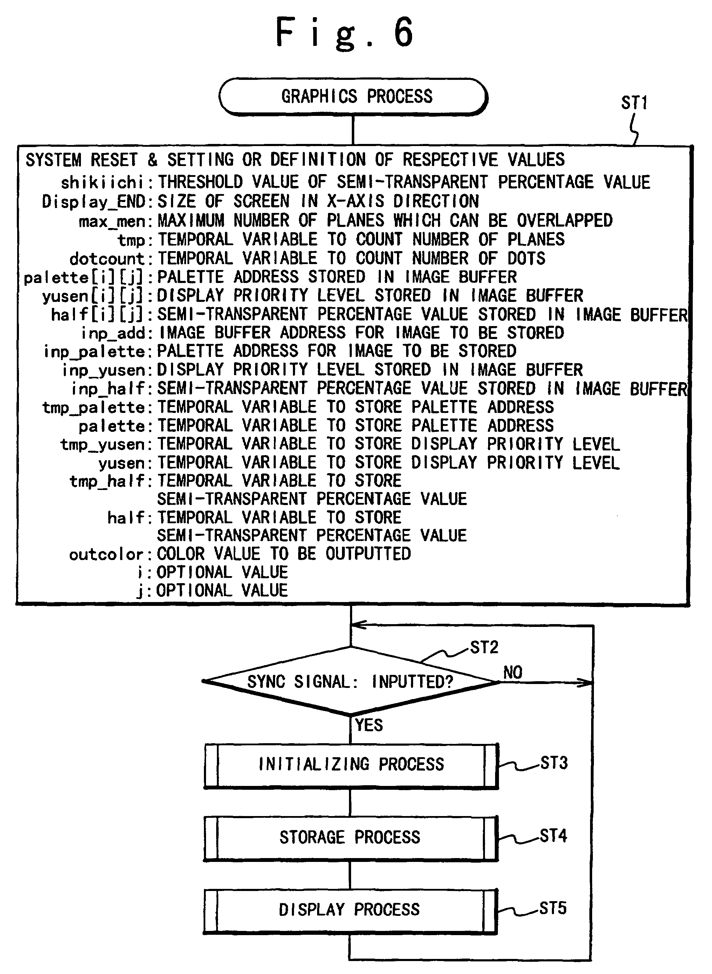

When the threshold value producing process ends, the graphics process shown in the flow chart of Fig. 6 is next carried out. The graphics process is started in response to the input of a predetermined instruction from the input unit 2, in the condition in which the threshold value producing process is already ended.

In the graphics process, the CPU 11 first carries out the system reset and the setting or definition of each value. Here, the threshold value semitransparent percentage is set to the variable shikiichi, and the data indicative of a screen $\times$ the size in an axial direction is set to a variable Display_END. Also, the maximum number of superposed planes, which is equal to the number of image buffers, is set to a variable max_men, and the number of the currently processed plane is set to a variable tmp. Also, the number of the currently processed dot is set to a variable dotcount, and the palette address of the image stored in the image buffer is set to a variable palette[i][j]. Also, the display priority level value of the image stored in the image buffer is set to a variable yusen[i][j], and the semitransparent value of the image stored in the image buffer is set to a variable half[i][j]. Also, the image buffer address value of the image to be stored is set to a variable inp_add, the palette address value of the image to be stored is set to a variable inp_palette, and the display priority level value of the image to be stored is set to a variable inp_yusen. Also, the semitransparent value of the image to be stored is set to a variable inp_half, the palette address value is set to variables tmp_palette and palette, and the display priority level value is set to variables tmp_yusen and yusen. Also, the temporary variable for the semitransparent value to be stored is set to variables tmp_half and half, and the color value to be outputted is set to a variable outocolor. In addition, optional values i and j are set (Step ST1).

Next, the CPU 11 waits the input of the sync signal (Step ST2). When the sync signal is inputted, an initializing process to be mentioned later is carried out (Step ST3), and then a storage process to be mentioned later is carried out (Step ST4). Moreover, a display process is carried out (Step ST5). After that, when the display process ends, the control operation returns to the step ST2. The CPU 11 repeats the above waiting process of the input of the sync signal. Thus, a display image is displayed on the display unit 3.

Hereinafter, each of "initializing process (step ST3)", " storage process (step ST4)" and " display process (step ST5) in Fig. 6 will be described in detail.

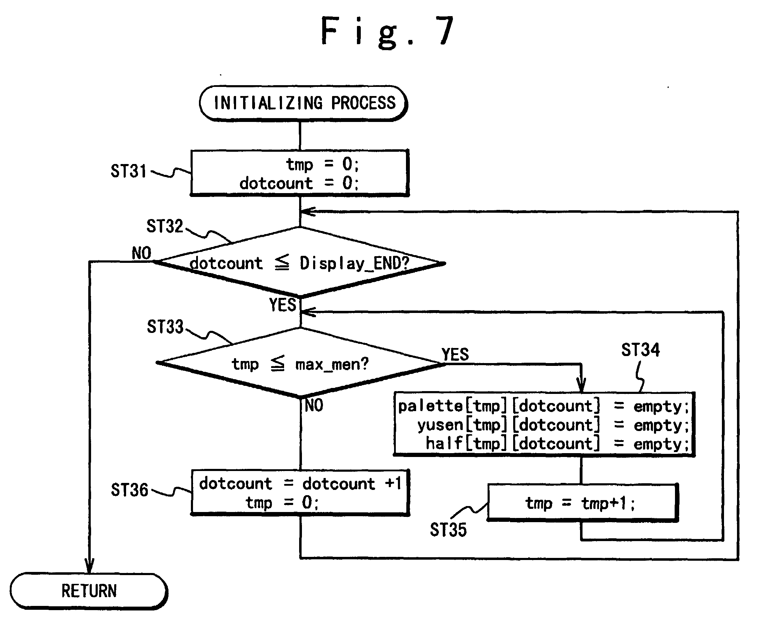

Fig. 7 is a flow chart showing the initializing process of the step ST3 in detail. The initializing process is a process for setting all the image buffers which store images as the object of the superposing display through the semitransparent process to an empty state.

When the process is started, the CPU 11 first substitutes "0" as the initial value for the temporary variable tmp to count the number of the current processed planes and the temporary variable dotcount to count the number of the currently processed dot, respectively (Step ST31). Next, the CPU 11 determines whether or not the variable Display_END indicative of the screen × the size in the axial direction is equal to or larger than the temporary variable dotcount to count the number of the currently processed dot. That is, the CPU 11 determines whether or not the picture element address for the image buffer to be currently processed equal to or larger than the last picture element address (Step ST32).

When it is determined that the variable Display_END indicative of the screen × the size in the axial direction is equal to or larger than the temporary variable dotcount to count the number of the currently processed dot, the CPU 11 determines whether or not the maximum number max_men of superposed planes is larger then the number tmp of the currently processed plane (Step ST33).

When it is determined that the maximum number max_men of superposed planes is equal to or larger then the number tmp of the currently processed planes, the CPU 11 sets the value empty indicative of nothing existing in the image buffer to the palette address palette[tmp][dotcount], the priority level value yusen[tmp][dotcount], and the semitransparent value [tmp][dotcount] (Step ST34). In addition, the CPU 11 increments the number tmp of the currently processed plane by "1" (Step ST35). After that, the control operation returns to the process of the step S33.

On the other hand, when it is determined that the maximum number max_men of superposed planes is smaller then the number tmp of the currently processed plane, the CPU 11 increments the temporary variable dotcount to count the number of the currently processed dot by "1". Also, the CPU 11 initializes the value of the number of the currently processed plane tmp to "0" again (Step ST36). After that, the control operation returns to the process of the step S32.

After that, at the step ST32, when it is determined that the variable Display_END indicative of the screen × the size in the axial direction is smaller than the temporary variable dotcount to count the number of the currently processed dot, the CPU 11 ends the initializing process. Then, the control operation returns to the process of the main routine (Fig. 6).

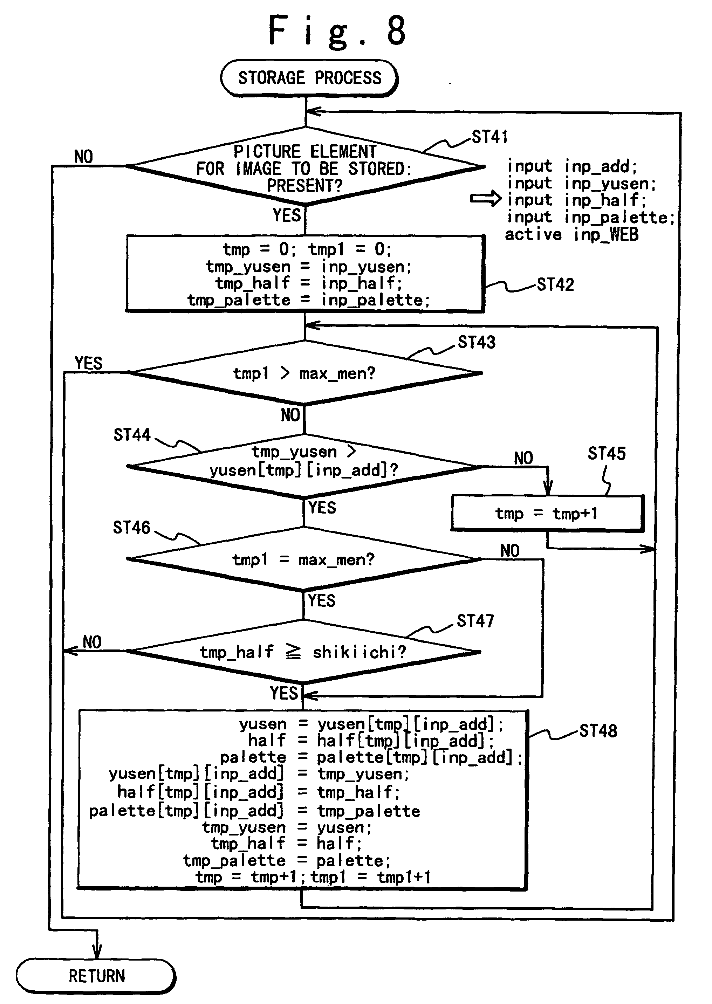

Fig. 8 is a flow chart showing the storage process of the step ST4 in detail. The storage process is the process for selecting an appropriate image among the images as the object of superposing display through the semitransparent process and storing it in the image buffer.

When the process is started, the CPU 11 first determines whether or not there is a picture element for the image to be stored in the image buffer (Step ST41). There is a case that a plurality of picture elements for the image to be stored exist. In this case, the CPU 11 determines whether or not any picture element to which the process of steps ST42 to ST48 to be mentioned later is not yet carried out is left. A storage request is carried out with input of the palette address value inp_palette for the image to be stored, the image buffer address value inp_add for the image to be stored, the display priority level value inp_yusen for the image to be stored, and the semitransparent value inp_half for the image to be stored. If there is not a picture element for the image to be stored, the storage process is ended. Then, the control operation returns to the process of the main routine (Fig. 6).

When there is a picture element for the image to be stored, the CPU 11 substitutes "0" for the number tmp of the currently processed plane as the initial value to change the setting of the image buffer to the most front. Also, the CPU 11 sets "0" to a variable temp1. In addition, the display priority level value inp_yusen is substituted for the variable tmp_yusen indicative of the display priority level value, the semitransparent value inp_yusen is substituted for the variable tmp_half indicative of the semitransparent value, and the palette address value inp_palette is substituted for the variable tmp_palette indicative of the palette address value (Step ST42).

Next, the CPU 11 determines whether or not the variable tmp1 indicative of the number of storage images is larger than the maximum number max_men of planes (Step ST43). When it is determined that the variable tmp1 indicative of the number of the currently processed plane is not larger than the maximum number max_men of planes, the CPU 11 determines for every image buffer whether or not the temporary variable tmp_yusen indicative of the display priority level is equal to or larger than the display priority level value yusen[tmp] [inp_add] stored in the image buffer. That is, the CPU 11 determines whether or not the temporary priority level is higher (Step ST44).

When it is determined that the temporary variable tmp_yusen indicative of the display priority level is not equal to or larger than the display priority level value yusen[tmp][inp_add] stored in the image buffer, the CPU 11 increments the value of the temporary variable tmp indicative of the number of the currently processed plane by "1" (Step ST45). Then, the control operation returns to the process of the step ST43.

When it is determined that the temporary variable tmp_yusen indicative of the display priority level is equal to or larger than the display priority level value yusen[tmp][inp_add] stored in the image buffer, the CPU 11 determines whether or not the value of the variable tmp1 indicative of the number of storage images is equal to the value of the maximum number max_men of planes (Step ST46). When it is determined not to be equal, the control operation advances to the process of the step ST48. On the other hand, when it is determined to be equal, the CPU 11 determines whether or not the semitransparent value of the currently processed plane which is set to the variable tmp_half is equal to or larger than the threshold value shikiichi previously determined as mentioned above (Step ST47). When it is determined to be not small, the control operation advances to the process of the step ST48.

The CPU 11 stores the image data in the image buffer at the step ST48. That is, the value of the variable yusen[tmp][inp_add] is substituted for the variable yusen, the value of the variable half[tmp][inp_add] is substituted for the variable half, and the value of the variable palette[tmp][inp_add] is substituted for the variable palette. Also, the value of the variable tmp_yusen is substituted for the variable yusen[tmp][inp_add], the value of the variable tmp_half is substituted for the variable half[tmp][inp_add], and the value of the variable tmp_palette is substituted for the variable palette[tmp][inp_add]. Also, the value of the variable yusen is substituted for the variable tmp_yusen, the value of the variable half is substituted for the variable tmp_half, and the value of the variable palette is substituted for the variable tmp_palette. Moreover, the variable tmp indicative of the number of the currently processed plane is added by "1".

At this time, when the image with the lower priority level is already stored in the image buffer, the image is shifted to the neighbor image buffer. Then, the concerned image with the higher priority level is stored in the image buffer in place of the image with the lower priority level. Then, the control operation returns to the process of the step ST43.

On the other hand, when it is determined at the step ST43 that the variable tmp indicative of the number of the currently processed plane equal to or larger than the maximum number max_men of planes, or when it is determined at the step ST47 that the semitransparent value of the currently processed plane which is set to the variable tmp_half is smaller than the threshold value shikiichi previously determined as mentioned above, the control operation returns to the process of the step ST41. After that, when there is not a picture element for the image to be stored, that is, when the determination result at the step ST41 becomes No, the storage process is ended. Then, the control operation returns to the process of the main routine (Fig. 6).

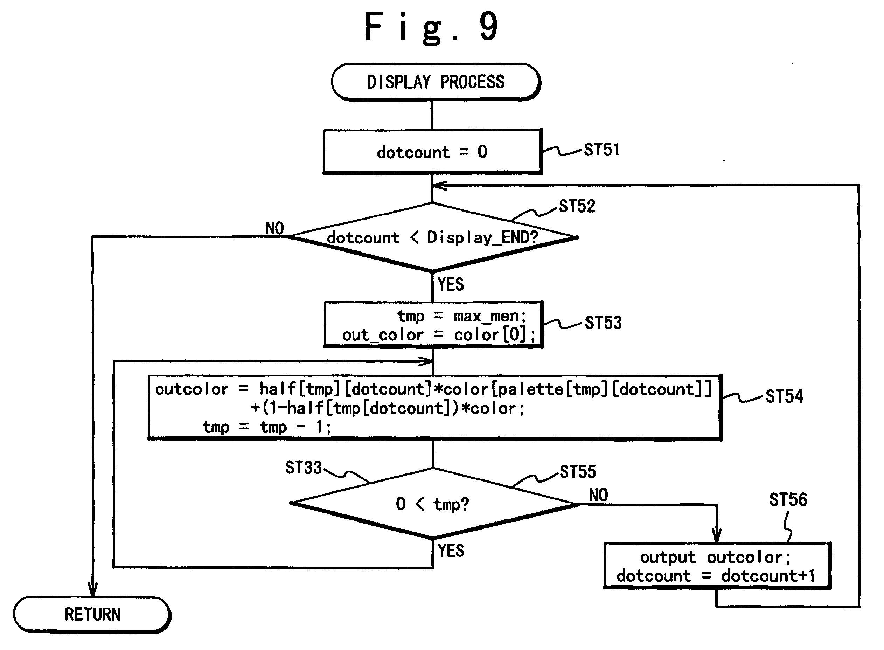

Fig. 9 is a flow chart indicative of the display process of a step ST5 in detail. In the display process, the semitransparent process is carried out to the images which are stored in the image buffers through the storage process. Thus, the display image to be displayed on the display unit 3 is generated.

When the process is started, the CPU 11 first substitutes "0" for the variable dotcount to count the number of processing dots (Step ST51). Next, the CPU 11 determines whether or not the value of the variable dotcount is equal to smaller than the value of the variable Display_END indicative of the screen × the size in an axial direction (Step ST52).

When the value of the variable dotcount is determined to be equal to or smaller than the value of the variable Display_END indicative of the screen × the size in an axial direction, the CPU 11 substitutes the value of the maximum number max_men of planes for the variable tmp indicative of the number of the currently processed plane, and substitutes data (color[0]) with a transparent color for the output color value outcolor (Step ST53).

Next, the CPU 11 carries out an operation of the following equation (3) and carries out the semitransparent process. Also, the CPU 11 decrements the value of the variable tmp indicative of the number of the currently processed plane by "1" (Step ST54).

$$\text{outcolor}$$
$$= \text{half[tmp][dotcount]}$$
$$* \text{color[palette[tmp][dotcount]]}$$
$$+ (1 - \text{half[tmp][dotcount]}) * \text{outcolor} \qquad (3)$$

Next, the CPU 11 determines whether or not the value of the variable tmp indicative of the number of the currently processed plane is larger than "0" (Step ST55). When it is determined to be large than "0", the control operation returns to the process of the step ST54. On the other hand, when it is determined to be not large "0", the color data shown by the variable outcolor is outputted for the currently displayed dot on the display unit 3 shown by the variable dotcount. Also, the value of the variable dotcount is incremented by "1" (Step ST56). After that, the control operation returns to the process of the step ST52.

After that, when it is determined at the step ST52 that the value of the variable dotcount is not smaller than the value of the variable Display_END indicative of the screen × the size in an axial direction, the process of the flow chart is ended. Then, the control operation returns to the process of the main routine (Fig. 6).

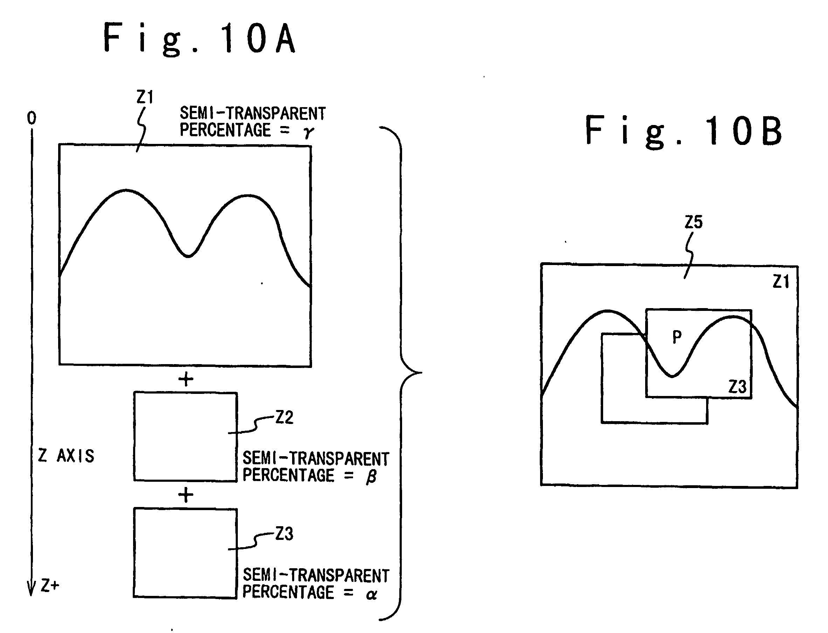

Next, the graphics process, especially, the semitransparent process of the image according to the first embodiment which is carried out in accordance with the above-mentioned flow chart will be described with reference to Figs. 10A and 10B. It is supposed that the number of image buffers provided is only two. Also, it is supposed that the images as the object for the process are three planes of Z1, Z2, and Z3 from the rear plane, and the semitransparent percentages are $\gamma$, $\beta$, and $\alpha$. In addition, it is supposed that the semitransparent percentage $\beta$ takes the value near "0" and the semitransparent percentage $\gamma$ exceeds the threshold value. Also, it is supposed that the point where the three images Z1, Z2, Z3 should be originally superposed is a P point.

In this example, when the semitransparent process is carried out to superpose all the three images Z1, Z2, and Z3, the color color_P of the display image to be originally displayed at the P point on the display unit is shown by the following equation (4).

$$color\_P$$

$$= \alpha\ color\_Z3$$

$$+ (1-\alpha)\ (\beta\ color\_Z2 + (1-\beta)\ \gamma\ color\_Z1) \qquad (4)$$

where color_Z* indicates the color at the P point of the image Z*.

However, because there are only two image buffers, only two of the images can be superposed and displayed. The semitransparent percentage $\beta$ of the second image Z2 from the front plane is near "0" and lower than the threshold value. On the other hand, the semitransparent percentage $\gamma$ of the image Z3 of the last plane is equal to or larger than the threshold value. Therefore, the image Z3 in the most front plane and the image Z1 of the most rear plane are stored in the two image buffers.

In this way, when the two images Z1 and Z3 stored in the two image buffers are superposed and the semitransparent process is carried out to the two images Z1 and Z3, the color color_P' at the P point of a display image Z5 which is actually displayed on the display unit is represented by the following equation (5).

$$color\_P'$$

$$= \alpha\ color\_Z3 + (1-\alpha)\ \gamma\ color\_Z1 \qquad (5)$$

In this case, the error of $(1-\alpha)\ \beta\ (color\_Z2 - \gamma\ color\_Z1)$ is generated between the color to be originally displayed and the displayed color. However, because $\beta \fallingdotseq 0$, the value of the error becomes approximately "0". Therefore, in the graphics process in this example, there is not a case that a large error is generated between the color color_P' at the P point of the image which is actually displayed on the display unit and the color color_P which should be originally displayed.

As described above, in the graphics process according to the first embodiment, there is a case that images more than the number of image buffers are superposed and displayed. In such a case, the image with the large semitransparent percentage on the more rear plane is stored in the image buffer rather than the image with the small semitransparent percentage on the more front plane. Such an image has the large influence to the color of the displayed image. Therefore, the error between the color of the image which should be originally displayed on the display unit and the color of the image which is actually displayed on the display unit is possible to be made small, compared with the conventional graphics process.

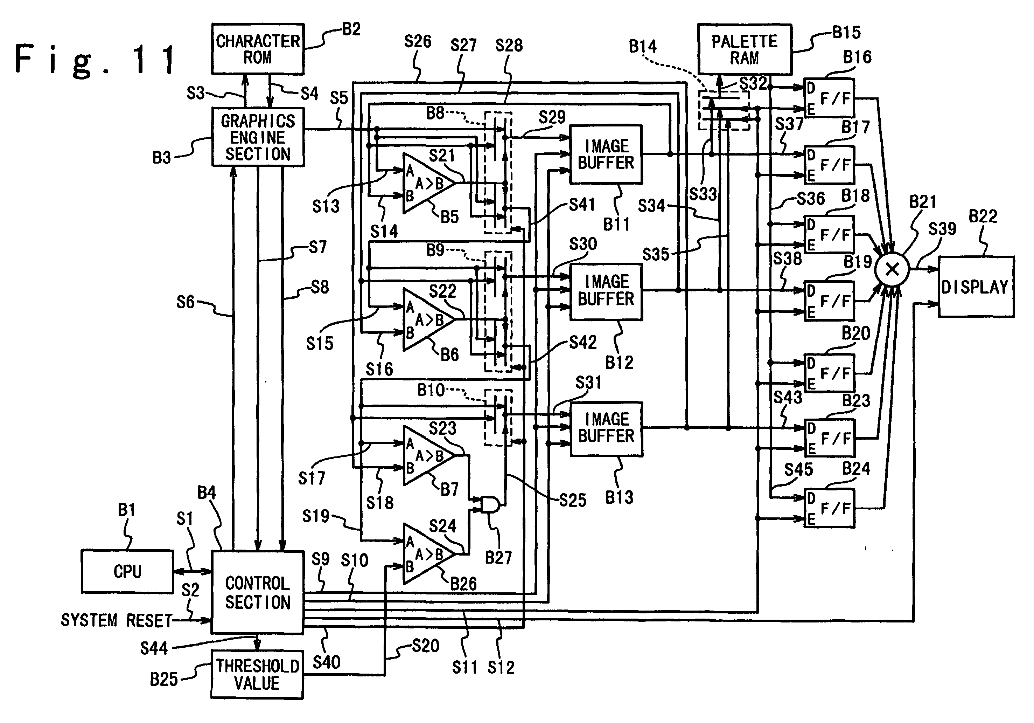

It should be noted that the graphics process according to the first embodiment can be carried out using an exclusive use hardware or a graphics engine. Fig. 11 is a block diagram showing the structure of the graphics engine to realize the graphic process according to the first embodiment.

As shown in Fig. 11, the graphics engine is composed of three image buffers B11 to B13. A control section B4 controls each section in the graphics engine in response to a request from the CPU B1 which carries out the other processes in conjunction with the graphics process. A threshold value register B25 stores the threshold value shikiichi which is previously calculated by the CPU B1.

The graphics engine section B3 outputs image data which should be stored in the image buffers B11 to B13, ROM address of a character ROM B2, an engine output image WEB, and an output image address in accordance with a control signal from the control section B4. Each of comparators B5 to B7 carries out comparison of the image data and the value of the variable yusen, and output a priority changing signal based on the comparison result. A comparator B26 compares the semitransparent percentage of the image with the threshold value shikiichi which is set in a threshold value register B25.

An $\alpha$ blending calculating unit B21 carries out predetermined calculation for the semitransparent process to the color data and the semitransparent percentage data outputted from flip-flop (F/F) B16 to B20, B23, and B24. Then, the $\alpha$ blending calculating unit B21 supplies the color data of the calculation result to an external display unit B22. Besides, the graphics engine is composed of the character ROM B2, a palette RAM B15, demultiplexers B8 and B9, selectors B10 and B14, the flip-flop B16 to B20, B23 and B24, and an AND circuit B27.

When the graphics process is carried out by the graphics engine, first, a system reset signal S2 is made active to resets the control section B4. Next, a CPU_I/F signal S1 is outputted from the CPU B1 to the control section B4 to carry out various types of setting as shown at the step ST1 to the control section B4 and the graphics engine section B3. At this time, the control section B4 outputs a threshold value setting signal S44 in response to the CPU_I/F signal S1 from the CPU B1 to set the threshold value shikiichi which is previously determined, to the threshold value register B25. Moreover, a sync signal S12 as shown at the step ST2 is outputted from the control section B4 to the display unit B22. In this way, the initializing process is started as shown at the step ST3.

In the initializing process, the control section B4 makes an initialization signal S40 active such that an empty signal is outputted from demultiplexers B8 and B9 and the demultiplexers B10. The graphics engine section B3 makes a storage image WEB S10 active in accordance with a control signal S6 from the control section B4. Also, storage image addresses S9 are incremented in order, so that the variable empty is set to all the variables palette [i] [j], yusen [i] [j], and half [i] [j] which are provided in the image buffers B11 to B13. In this way, when the initializing process ends, the storage process shown at the step ST4 is next started.

In the storage process, the control section B4 outputs the engine control signal S6 to the graphics engine section B3 as parameters necessary for the displayed images in accordance with the CPU_I/F signal S1 which is outputted from the CPU B1. The graphics engine section B3 calculates the ROM address S3 from the parameters given by the engine control signal S6 to output to the character ROM B2. The character ROM B2 returns the ROM data S4 to the graphics engine section B3 in accordance with the ROM address S3 from the graphics engine section B3.

The graphics engine section B3 outputs the image S5 to the image buffers B11 to B13 and the engine output image WEB S7 and the engine output image address S8 to the control section B4 in order in accordance with the set values in the start of the graphics process and the returned ROM data S4. Here, the image S5 is composed of 3 elements of palette, yusen, and half.

Next, the comparator B5 compares the variable yusen which is contained in the image S5 and the yusen which is contained in the image buffer output signal S28 which is outputted from the image buffer B11. Then, the comparator B5 outputs a priority changing signal S21 in accordance with the comparing result. The demultiplexer B8 outputs one having the higher priority level of the image S5 and the image buffer output signal S28 as image buffer input signal S29 in accordance with the priority changing signal S21. The demultiplexer B8 outputs the other having the lower priority level as the next image buffer comparison data S41. Here, the image buffer B11 stores the image buffer input signal S29.

Next, the comparator B6 compares the variable yusen which is contained in the next image buffer comparison data S41 and the variable yusen which is contained in the image buffer output signal S27 which is outputted from the image buffer B12. Then, the comparator B6 outputs the priority changing signal S22 in accordance with the comparing result. The demultiplexer B9 outputs one having the higher priority level of the next image buffer comparison data S41 and image buffer output signal S27 as the image buffer input signal S30 in accordance with the priority changing signal S22. Also, the demultiplexer B9 outputs the other having the lower priority level as the next image buffer comparison data S42. Here, the image buffer B12 stores the image buffer input signal S30.

Next, the comparator B7 compares the variable yusen which is contained in the next image buffer comparison data S42 and the variable yusen which is contained in the image buffer output signal S26 which is outputted from the image buffer B13. Then, the comparator B7 outputs the priority changing signal S23 in accordance with the comparing result. On the other hand, the comparator B26 compares the variable half which is contained in the next image buffer comparison data S42 and the threshold value shikiichi which is set to the threshold value register B25. Then, the comparator B26 outputs the semitransparent changing signal S24 in accordance with the comparing result. The AND circuit B27 calculates the logical sum of the priority changing signal S23 and the semitransparent switching signal S24, and outputs the result as a switching signal S25.

The demultiplexer B10 outputs the next image buffer comparison data S42 as the image buffer input signal S31 in accordance with the exchange signal S25, when the next image buffer comparison data S42 has the higher priority level and the semitransparent percentage half is higher than the threshold value shikiich. The image buffer input signal S31 is stored in image buffer B13. Otherwise, the demultiplexer B10 stores the image buffer output signal S26 in the image buffer B13 again. The above operation is repeated for all the picture elements and all the planes. When the storage process is ended in this way, the display process as shown at the step ST5 is next started.

In the display process, the control section B4 increments the storage image address S9 given to the image buffers B11 to B13 in order from "0" so that the image or image buffer output signals S26 to S28 are outputted from the image buffers B11 to B13 in order in units of picture elements. A selector B14 extracts palette addresses S33 to S35 from the image buffer output signals S26 to S28 which are outputted from the image buffers B11 to B13, respectively. Also, the selector B14 outputs the palette address S32 to the palette RAM B15 in order in accordance with the palette control signal S11 from the control section B4.

The palette RAM B15 outputs the color data S36 in accordance with the supplied palette address S32 so that the color data S36 are accumulated to the flip-flops B16, B18, and B20 in accordance with the palette control signal S11 from the control section B4, respectively. Also, the semitransparent percentages S37, S38, and S43 of the image buffer output signals S26 to S28 which are outputted from the image buffers B11 to B13 are accumulated in the flip-flops B17, B19, and B23 in the order, respectively, in accordance with the palette control signal S11 from the control section B4. Moreover, the color data S45 with the transparent color which is set to the palette RAM B15 are accumulated in the flip-flop B24 in order in accordance with the palette control signal S11 from the control section B4.

After that, the α blending calculating unit B21 carries out a predetermined operation for the semitransparent process in order to the color data accumulated in the flip-flops B16, B18, and B20, the semitransparent percentages which are accumulated in the flip-flop B17, B19, and B23 and the color data with the transparent color which is accumulated in the flip-flop B24. The α blending calculating unit B21 outputs the calculation result as the color data B39 of the display image to be displayed to the display unit B22 in order. The color data B39 for all the addresses are outputted in this way. When the display process ends, the sync signal S12 is outputted from the control section B4 again and moreover the initializing process is carried out.

The structure of the computer system applied to the graphics process according to the second embodiment of the present invention is the same as the one of the first embodiment. However, in the graphics process of the second embodiment, the threshold value is previously not calculated and stored in the table and so on. The threshold value is calculated and is determined while the storage process is carried out. Therefore, in the second embodiment, it is not necessary to carry out the threshold value producing process prior to the graphics process. Also, the storage process of step ST4 is different from that of the first embodiment (Fig. 11).

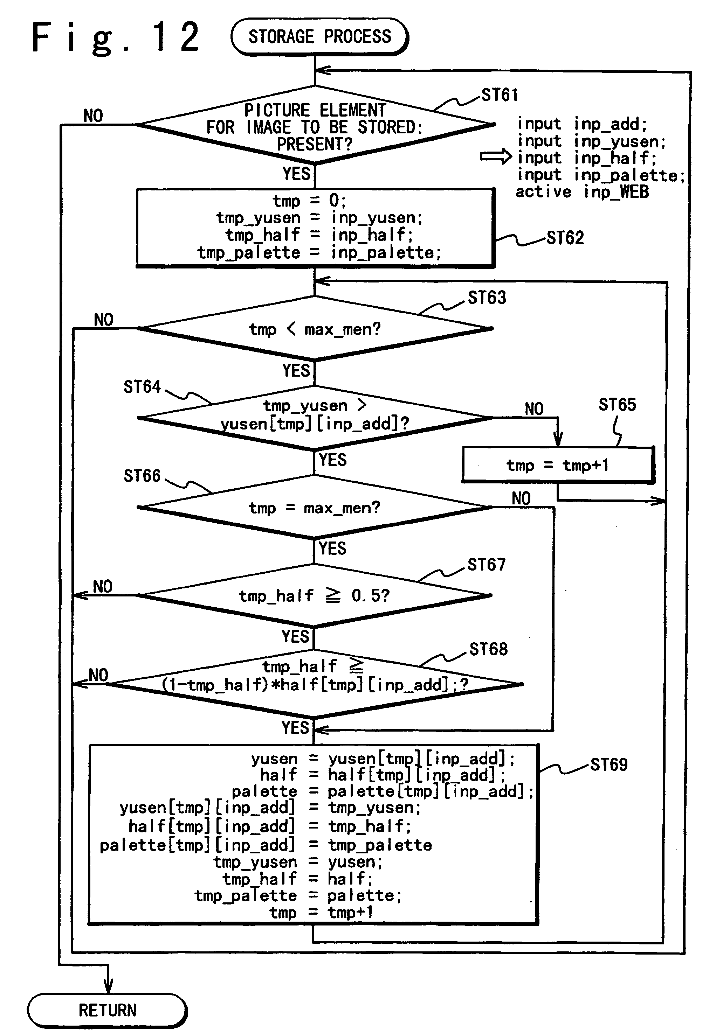

Fig. 12 is a flow chart showing the storage process of the second embodiment. In case of the storage process, the process of the steps ST61 to ST66 is the same as the process of the steps ST41 to 46 of Fig. 8. Also, when the determination result of the step ST66 is No, the control operation advances to the process of the step ST69. However, the process of the step ST69 is the same as the process of the step ST48 of Fig. 8.

On the other hand, when the determination result of the step ST66 is Yes, that is, when it is determined that the value of the variable tmp indicative of the number of the currently processed plane is equal to the value of the maximum number max_men of planes, a step ST67 is carried out. at the step ST67, the CPU 11 determines whether or not the value of the variable tmp_half for storing the semitransparent value is equal to or larger than 0.5.

When it is determined that the value of the variable tmp_half for storing the semitransparent value is equal to or larger than 0.5, the CPU 11 moreover determines whether or not the value of the variable tmp_half for storing the semitransparent value is equal to ro larger than (1-tmp_half) * half [tmp] [inp_add] (Step ST68). When it is determined that the value of the variable tmp_half for storing the semitransparent value is equal to or larger than (1-tmp_half) * half[tmp] [inp_add], the control operation advances to the process of the above-mentioned step ST69.

On the other hand, when it is determined at the step ST67 that the value of the variable tmp_half for storing the semitransparent value is smaller than 0.5, or when it is determined at the step ST68 that the value of the variable tmp_half for storing the semitransparent value is smaller than (1-tmp_half) * half[tmp][inp_add], the control operation returns to the process of the step ST63.

In the storage process of the second embodiment, an image of the rear plane with the semitransparent percentage equal to or larger than 0.5 is stored in the image buffer rather than the image of the more front plane with the semitransparent percentage smaller than 0.5, even if the calculation of the threshold value shikiichi is not previously carried out, unlike the first embodiment.

As described above, even in the graphics process according to the second embodiment, the image which is on the more rear plane and which has the large semitransparent percentage and the large influence to the color of the display image is stored in the image buffer, rather than the image which is on the more front plane and which has the small semitransparent percentage, when images more than the number of image buffers are superposed and displayed. Therefore, the color difference between the color of the image which should be originally displayed on the display unit and the color of the image which is actually displayed on the display unit is possible to be made small, compared with the conventional graphics process.

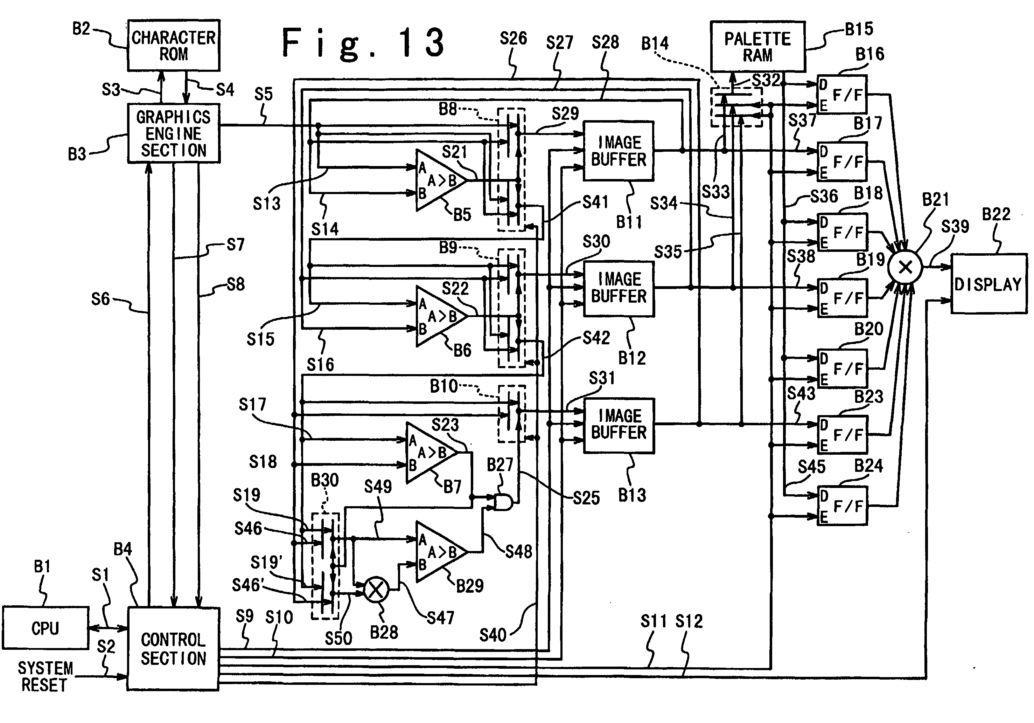

It should be noted that the graphics process according to the second embodiment is also possible to be carried out using the exclusive use hardware or the graphics engine. Fig. 13 is a block diagram showing the structure of the graphics engine to realize the graphic process according to the second embodiment.

The structure of the graphics engine is the same as that of the first embodiment except for the point that a demultiplexer B30, a semitransparent calculating unit B28 and a comparator B29 are provided instead of the threshold value register B25 and the comparator B26 shown in the first embodiment.

Also, the graphics process of the graphics engine is the same as that of the graphics engine in the first embodiment except for the point that the threshold value shikiichi is not set in case of the initializing process and the storage process is different.

In the storage process by the graphics engine, the process to the step at which the image S5, the engine output image WEB S7 and the engine output image address S8 are outputted from the graphics engine section B3 is the same as that of the first embodiment.

Next, the comparator B5 compares the variable yusen which is contained in the image S5 and the variable yusen which is contained in the image buffer output signal S28 which is outputted from the image buffer B11. Then, the comparator B5 outputs the priority changing signal S21 in accordance with the comparing result. The demultiplexer B8 outputs one having the higher priority level of the image S5 and the image buffer output signal S28 as the image buffer input signal S29. Also, the demultiplexer B8 outputs the other having the lower priority level as the next image buffer comparison data S41 in accordance with the priority changing signal S21. Here, the image buffer B11 stores the image buffer input signal S29.

Next, the comparator B6 compares the variable yusen which is contained in the next image buffer comparison data S41 and the variable yusen which is contained in the image buffer output signal S27 which is outputted from the image buffer B12. Then, the comparator B6 outputs the priority changing signal S22 in accordance with the comparing result. The demultiplexer B9 outputs one having the higher priority level of the next image buffer comparison data S41 and the image buffer output signal S27 as the image buffer input signal S30. Also, the demultiplexer B9 outputs the other having the lower priority level as the next image buffer comparison data S42 in accordance with the priority changing signal S22. Here, the image buffer B12 stores the image buffer input signal S30.

Next, the comparator B7 compares the variable yusen S18 which is contained in the next image buffer comparison data S42 and the variable yusen S19 which is contained in the image buffer output signal S26 which is outputted from the image buffer B13. Then, the comparator B7 outputs the priority changing signal S23 in accordance with the comparing result. On the other hand, the demultiplexer B30 compares the variable half S18' which is contained in the next image buffer comparison data S42 and the variable half S19' which is contained in the image buffer output signal S26 which is outputted from the image buffer B13. Then, the demultiplexer B30 outputs the higher one of the higher semitransparent percentages as a superior semitransparent percentage S49, and the lower one as inferior semitransparent percentage S50.

The semitransparent percentage calculating unit B28 carries out an operation shown in the following equation (6) to the superior semitransparent percentage S49 and inferior semitransparent percentage S50 which are outputted from the demultiplexer B30. Then, the semitransparent percentage calculating unit B28 outputs the operation result as the semitransparent calculation data S47.

$$\text{(Semitransparent calculation data)}$$

$$= (1 - \text{(superior semitransparent percentage)}$$

$$\times \text{(inferior semitransparent percentage))} \quad (6)$$

Next, the comparator B29 compares the superior semitransparent percentage S49 which is outputted from the demultiplexer B30 and the semitransparent calculation data S47 which is outputted from the semitransparent percentage calculating unit B28. Then, the comparator B29 outputs the threshold value semitransparent changing signal S48 in accordance with the comparing result. The AND circuit B27 takes the logical sum of the priority changing signal S23 and the threshold value semitransparent changing signal S48, and outputs the result of the logical sum as the exchange signal S25.

After that, the demultiplexer B10 outputs the next image buffer comparison data S42 as the image buffer input signal S31 in accordance with the exchange signal S25, when the next image buffer comparison data S42 has the higher priority level and the semitransparent percentage half is higher than the threshold value shikiichi. The next image buffer comparison data S42 is stored in the image buffer B13. Otherwise, the demultiplexer B10 stores the image buffer output signal S26 in the image buffer B13 again. The above operation is repeated to of all the picture elements, and the images of all planes.

The present invention is not limited to the above-mentioned first and second embodiments, and various modifications and applications are possible. Hereinafter, modifications of the above-mentioned embodiments which can be applied to the present invention will be described.

In the above-mentioned first and second embodiments, the structures of Fig. 11 and Fig. 13 are illustrated as the exclusive use graphics engines which carry out the graphics processes. However, if the graphics processes in the above-mentioned first and second embodiments can be realized, the structure of the exclusive use graphics engine is not limited to them.

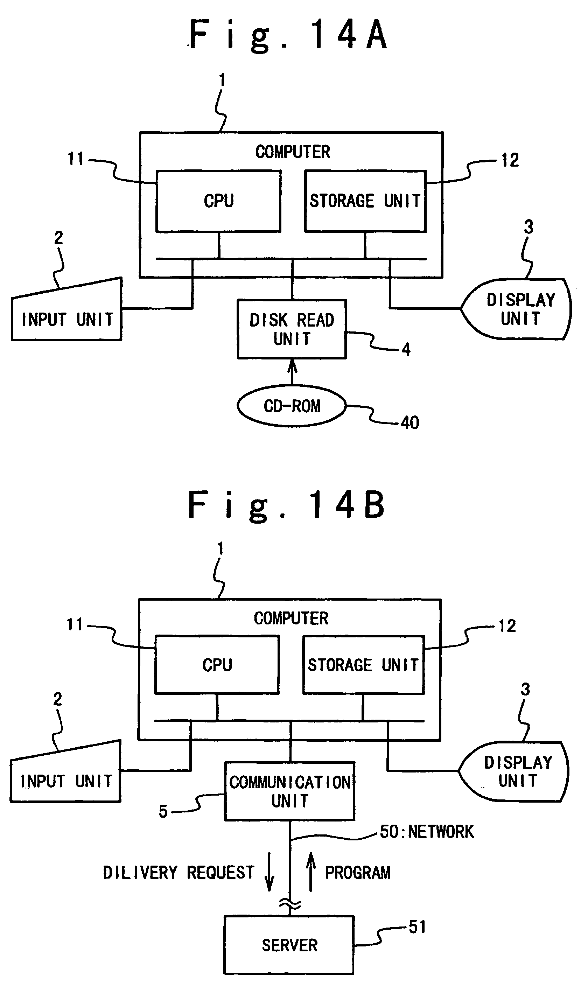

In the above-mentioned first and second embodiments, the program shown by each flow chart is stored in the storage unit 12, and the CPU 11 carries out the program. However, as shown in Fig. 14A, these programs may be stored in the computer readable recording medium such as a CD-ROM 40 and may be distributed. In this case, the program may be read by a disk read unit 4 and stored in the storage unit 12.

Also, as shown in Fig. 14B, these programs may be stored in the storage unit 12 by sending a delivery request from a communication unit 5 to a server 51 through a network 50, and receiving a signal indicative of the programs carried on a carrier wave from the server 51 by the communication unit 5.

Moreover, the program may be stored in the recording medium such as a CD-ROM 40 and distributed as shown in Fig. 14A. The program may be delivered from the server 51 through the network 50 as shown in Fig. 14B. Only a portion of the flow charts of the Fig. 5, Fig. 8 or Fig. 12 which is different from the conventional graphic process. In this way, the program for the graphic process which is carried out by conventional general purpose computer can be changed into the program for the graphic process which is described in the above first and second embodiments.

As described above, according to the present invention, the color difference between the image which should be originally displayed on the display unit and the image which is actually displayed on the display unit can be made small.

## Claims

1. A graphics processing apparatus comprising:

   m image buffers (B11, B12, B13), wherein m is an integer of more than 1,
   a display unit (B22) comprising X dots,
   a graphics engine section (B3), which outputs n images, n being an integer bigger than m, each image comprising color data for a plurality of dots of the display unit, a priority level value, and a semitransparency value,
   a selecting section (B4 to B10, B25, B27 to B30) which

   - selects (m-1) storage images as (m-1) of m storage images with the highest priority level value up to the (m-1)th highest priority level from among said n images,
   - selects an mth image of said m storage images from among said n images other than said (m-1) images, wherein said mth image is the image with the mth highest priority value, unless the semitransparency value of the image with the m+1th highest priority level is above a threshold value, in which case the mth image is the image with the m+1th highest priority level,
   - and finally stores the color data of said m storage images in said m image buffers,

   a display driving section (B15, B16 to B24) which reads out the color data of said m images from said m image buffers in units of dots to produce a display image and drives said display unit such that said display image is displayed.

2. The graphics processing apparatus according to claim 1, wherein said selecting section stores said m storage images in said m image buffers in order of said priority levels.

3. The graphics processing apparatus according to claim 2, wherein said selecting section stores one with a first priority level of said m storage images in a first one of said m image buffers, and shifts said one storage image to a second one of said m image buffers and then stores a next one with a second priority level in said first image buffer, when said next one storage image is selected, said second priority level being higher than said first priority level.

4. The graphics processing apparatus according to any of claims 1 to 3, wherein said selecting section includes:

   a threshold value storage section (B25) which stores said threshold value, said threshold value is the highest one of said semitransparency values of ones for a predetermined number of said n images, and
   said selecting section reads out said threshold value from said threshold value storage section.

5. The graphics processing apparatus according to claim 4, further comprising:

   a threshold value determining section (B1) which determines said threshold value prior to said selection by said selecting section, and stores the determined threshold value in said threshold value storage section.

6. The graphics processing apparatus according to claim 4, wherein said threshold value is equal to or larger than a preset value.

7. The graphics processing apparatus according to claim 6, wherein said selecting section includes:

   a threshold value determining section (B28 and B29) which determines said threshold value prior to said selection by said selecting section, and stores the determined threshold value in said threshold value storage section.

8. The graphics processing apparatus according to any of claims 1 to 3, wherein said selecting section includes:

   a determining section which determines whether a concerned image of said n images other than said (m-1) images has said semitransparency value equal to or larger than said threshold value, and selects said concerned image as the last one of said m storage images when said concerned image has said semitransparency value equal to or larger than said threshold value.

9. The graphics processing apparatus according to claim 8, wherein said threshold value is a multiplication of a difference between the highest value and said semitransparency value of said concerned image and said semitransparency value of each of said storage images already stored in said image buffers.

**10.** The graphics processing apparatus according to claim 8, wherein said determining section further determines whether said semitransparency value of said concerned image is equal to or larger than a preset value, and selects said concerned image as the last one of said m storage images when said concerned image has said semitransparency value equal to or larger than said preset value.

**11.** A method of displaying a display image on a display unit comprising dots, wherein the method comprises the steps of:

receiving n images, wherein n, m are integers with n being bigger than m, and m being bigger than 1, each image comprising color data for a plurality of dots of the display unit, a priority level value, and a semitransparency value,

selecting (m-1) storage images as (m-1) of m storage images with the highest priority level value up to the (m-1) th highest priority level from among said n images, to store in (m-1) of m image buffers,

selecting an mth image of said m storage images from among said n images other than said (m-1) images, wherein said mth image is the image with the mth highest priority value, unless the semitransparency value of the image with the m+1th highest priority level is above a threshold value, in which case the mth image is the image with the m+1th highest priority level, to store in the remaining one of said m image buffers,

storing the color data of said m storage images in said m image buffers,

reading out the color data of said m images from said m image buffers in units of dots to produce a display image, and

driving said display unit such that said display image is displayed.

**12.** The method according to claim 11, wherein said selecting (m-1) images includes:

storing said m storage images in said m image buffers in order of said priority levels.

**13.** The method according to claim 12, wherein said selecting (m-1) images includes:

comparing said priority level of one with a first priority level of said m storage images which is stored in a first one of said m image buffers and said priority level of a next one with a second priority level;

shifting said one storage image to a second one of said m image buffers when said next one storage image has said second priority level higher than said first priority level; and

storing said next image with said second priority level in said first image buffer.

**14.** The method according to any of claims 11 to 13, further comprising:

determining said threshold value which is the highest one of said semitransparency values of ones for a predetermined number of said n images.

**15.** The method according to claim 14, wherein said determining said threshold value is carried out prior to said selecting said m images.

**16.** The method according to claim 14, wherein said determining said threshold value includes:

determining said threshold value when said threshold value is equal to or larger than a preset value.

**17.** The method according to claim 14, wherein said determining said threshold value is carried out prior to said selecting said m images.

**18.** The method according to any of claims 11 to 13, wherein said selecting one image includes:

checking whether a concerned image of said n images other than said (m-1) images has said semitransparency value equal to or larger than said threshold value; and

selecting said concerned image as the last one of said m storage images when said concerned image has said semitransparency value equal to or larger than said threshold value.

**19.** The method according to claim 18, wherein said threshold value is a multiplication of a difference between the highest value and said semitransparency value of said concerned image and said semitransparency value of each of said storage images already stored in said image buffers.

**20.** The method according to claim 18, wherein said checking further includes:

determining whether said semitransparency value of said concerned image is equal to or larger than a preset value; and

selecting said concerned image as the last one of said m storage images when said concerned image has said semitransparency value equal to or larger than said preset value.

**21.** A recording medium in which a program is recorded which is adapted to perform all the steps of the method according to claim 11.

22. The recording medium according to claim 21, wherein said selecting (m-1) images includes:

storing said m storage images in said m image buffers in order of said priority levels.

23. The recording medium according to claim 22, wherein selecting (m-1) images includes:

comparing said priority level of one with a first priority level of said m storage images which is stored in a first one of said m image buffers and said priority level of a next one with a second priority level;
shifting said one storage image to a second one of said m image buffers when said next one storage image has said second priority level higher than said first priority level; and
storing said next image with said second priority level in said first image buffer.

24. The recording medium according to any of claims 21 to 23, further comprising:

determining said threshold value which is the highest one of said semitransparent values of ones for a predetermined number of said n images.

25. The recording medium according to claim 24, wherein said determining said threshold value is carried out prior to said selecting said m images.

26. The recording medium according to claim 24, wherein said determining said threshold value includes:

determining said threshold value when said threshold value is equal to or larger than a preset value.

27. The recording medium according to claim 24, wherein said determining said threshold value is carried out prior to said selecting said m images.

28. The recording medium according to any of claims 21 to 23, wherein said selecting one image includes:

checking whether a concerned image of said n images other than said (m-1) images has said semitransparent value equal to or larger than said threshold value; and
selecting said concerned image as the last one of said m storage images when said concerned image has said semitransparent value equal to or larger than said threshold value.

29. The recording medium according to claim 28, wherein said threshold value is a multiplication of a difference between the highest value and said semitransparent value of said concerned image and said semitransparent value of each of said storage images already stored in said image buffers.

30. The recording medium according to claim 28, wherein said checking further includes:

determining whether said semitransparent value of said concerned image is equal to or larger than a preset value; and
selecting said concerned image as the last one of said m storage images when said concerned image has said semitransparent value equal to or larger than said preset value.

**Patentansprüche**

1. Grafikdatenverarbeitungsgerät umfassend:

m Abbildungspuffer (B11, B12, B13), wobei m eine ganze Zahl größer als 1 ist,
eine Anzeigeeinheit (B22), die X Bildpunkte umfasst,
ein Grafikverarbeitungseinheit, die n Abbildungen ausgibt, wobei n eine ganze Zahl größer als m ist, wobei jede Abbildung Farbdaten für mehrere Bildpunkte der Anzeigeeinheit, ein Prioritätsniveauwert und einen Semitransparenzwert umfasst, eine Auswahleinheit (B4 bis B10, B25, B27 bis B30), die

- (m-1) Speicherbilder aus den n Abbildungen auswählt, wobei die (m-1) Speicherbilder den Speicherbildern mit dem höchsten Prioritätsniveauwert bis zu dem m-1 höchsten Prioritätsniveau entsprechen,
- eine mte Abbildung aus den n Abbildungen der m Speicherbilder auswählt, wobei die mte Abbildung einer anderen als den (m-1) Abbildungen entspricht, wobei die mte Abbildung die Abbildung mit dem mten höchsten Prioritätsniveauwert ist, wobei in einem Fall, wenn der Semitransparenzwert der Abbildung mit dem m+1ten höchsten Prioritätsniveau nicht über einem Schwellwert liegt, die mte Abbildung die Abbildung mit dem m+1ten höchsten Prioritätsniveauwert ist,
- und abschließend die Farbdaten der m Speicherbilder in den m Abbildungspuffern speichert,

eine Anzeigetreibereinheit (B15, B16, B24), die die Farbdaten der m Abbildungen aus den m Abbildungspuffern in Bildpunkteinheiten ausliest, um eine Anzeige zu erzeugen und die Anzeigeeinheit so anzusteuern, dass die Anzeige angezeigt wird.

2. Grafikdatenverarbeitungsgerät nach Anspruch 1, wobei die Auswahleinheit m Speicherbilder in m Abbildungspuffern in der Reihenfolge der Prioritätsniveaus speichert.

3. Grafikdatenverarbeitungsgerät nach Anspruch 2, wobei die Auswahleinheit eines der m Speicherbilder mit einem ersten Prioritätniveau in einem ersten der m Abbildungspuffer speichert, und das eine Speicherbild in einen zweiten der m Abbildungspuffer verschiebt, und dann ein nächstes Speicherbild mit einem zweiten Prioritätsniveau in dem ersten Abbildungspuffer speichert, nachdem das nächste Speicherbild ausgewählt ist, wobei das zweite Prioritätsniveau höher ist als das erste Prioritätsniveau.

4. Grafikdatenverarbeitungsgerät nach einem der Ansprüche 1 bis 3, wobei die Auswahleinheit umfasst:

eine Schwellwertspeichereinheit (B25), die den Schwellwert speichert, wobei der Schwellwert der größte der Semitransparenzwerte einer vorbestimmten Anzahl der n Abbildungen ist, und die Auswahleinheit, die den Schwellwert aus dem Schwellwertspeichereinheit ausliest.

5. Grafikdatenverarbeitungsgerät nach Anspruch 4, das weiterhin umfasst:

eine Schwellwertbestimmungseinheit (B1), die den Schwellwert vor der Auswahl durch die Auswahleinheit bestimmt und den bestimmten Schwellwert in der Schwellwertspeichereinheit speichert.

6. Grafikdatenverarbeitungsgerät nach Anspruch 4, wobei der Schwellwert gleich oder größer als ein voreingestellter Wert ist.

7. Grafikdatenverarbeitungsgerät nach Anspruch 6, wobei die Auswahleinheit umfasst:

eine Schwellwertbestimmungseinheit (B28 und B29), die den Schwellwert vor der Auswahl durch die Auswahleinheit bestimmt und den bestimmten Schwellwert in der Schwellwertspeichereinheit speichert.

8. Grafikdatenverarbeitungsgerät nach einem der Ansprüche 1 bis 3, wobei die Auswahleinheit umfasst:

eine Bestimmungseinheit, die feststellt, ob eine betreffende Abbildung aus den n Abbildungen, die eine anderen Abbildung als die (m-1) Abbildungen entspricht, einen Semitransparenzwert aufweist, der gleich oder größer als der Schwellwert ist, und die die betreffende Abbildung als letzte der m Speicherbilder auswählt, wenn die betreffende Abbildung einen Semitransparenzwert aufweist, der gleich oder größer als der Schwellwert ist.

9. Grafikdatenverarbeitungsgerät nach Anspruch 8, wobei der Schwellwert eine Multiplikation einer Differenz zwischen dem höchsten Wert und dem Semitransparenzwert der betreffenden Abbildung und dem Semitransparenzwert jeder der Speicherbilder, die bereits in dem Abbildungspuffer gespeichert sind, ist.

10. Grafikdatenverarbeitungsgerät nach Anspruch 8, wobei die Bestimmungseinheit weiterhin feststellt, ob der Semitransparenzwert der betreffenden Abbildung gleich oder größer ist als ein voreingestellter Wert, und die betreffende Abbildung als das letzte der m Speicherbilder auswählt, wenn die betreffende Abbildung einen Semitransparenzwert aufweist, der gleich oder größer als der voreingestellte Wert ist.

11. Verfahren zum Anzeigen einer Anzeige auf einer Anzeigeeinheit die Bildpunkte umfasst, mit folgenden Schritten:

Empfangen von n Abbildungen, wobei n, m ganze Zahlen sind, wobei n größer als m und m größer als 1 ist, wobei jede Abbildung Farbdaten für mehrere Bildpunkte der Anzeigeeinheit, einen Prioritätsniveauwert und einen Semitransparenzwert aufweist, Auswählen von (m-1) Speicherbildern aus den n Abbildungen, wobei die (m-1) Speicherbilder den Speicherbildern mit dem höchsten Prioritätsniveauwert bis zu dem (m-1) höchsten Prioritätsniveau entsprechen, um diese in (m-1) von m Abbildungspuffern zu speichern; Auswählen einer mten Abbildung aus den n Abbildungen der m Speicherbilder, wobei die mte Abbildung einer anderen als den (m-1) Abbildungen entspricht, wobei die mte Abbildung die Abbildung mit dem mten höchsten Prioritätswert ist, wobei in einem Fall, wenn der Semitransparenzwert der Abbildung mit dem m+1ten höchsten Prioritätsniveau nicht über einem Schwellwert liegt, die mte Abbildung die Abbildung mit dem m+1ten höchsten Prioritätsniveau ist, um die mte Abbildung in dem verbleibenden der m Abbildungspuffer zu speichern,

Speichern der Farbdaten der m Speicherbilder in den m Abbildungspuffern,

Auslesen der Farbdaten der m Abbildungen aus den m Abbildungspuffern in Bildpunkteinheiten, um eine Anzeige zu erzeugen, und Ansteuern der Anzeigeeinheit, so dass die Anzeige angezeigt wird.

12. Verfahren nach Anspruch 11, wobei das Auswählen der (m-1) Abbildungen den Schritt umfasst:

Speichern der m Speicherbilder in den m Abbildungspuffern in der Reihenfolge der Prioritätsniveaus.

13. Verfahren nach Anspruch 12, wobei das Auswählen der (M-1) Abbildungen den Schritt umfasst:

Vergleichen des Prioritätsniveaus eines der m Speicherbilder, das in einem ersten der m Abbildungspuffer gespeichert ist, mit dem Prioritätsniveau eines nächsten Speicherbildes mit einem zweiten Prioritätsniveau; Verschieben des einen Speicherbildes auf einen zweiten der m Abbildungspuffer, wenn das zweite Prioritätsniveau des nächsten Speicherbildes größer ist als das erste Prioritätsniveau; und Speichern der nächsten Abbildung mit dem zweiten Prioritätsniveau in den ersten Abbildungspuffer.

14. Verfahren nach einem der Ansprüche 11 bis 13, mit dem weiteren Schritt:

Bestimmen des Schwellwerts, der der größte der Semitransparenzwerte einer vorbestimmten Anzahl von n Abbildungen ist.

15. Verfahren nach Anspruch 14, wobei das Bestimmen des Schwellwertes vor dem Auswählen der m Abbildungen ausgeführt wird.

16. Verfahren nach Anspruch 14, wobei das Bestimmen des Schwellwerts umfasst:

Bestimmen des Schwellwerts, wenn der Schwellwert gleich oder größer als ein voreingestellter Wert ist.

17. Verfahren nach Anspruch 14, wobei das Bestimmen des Schwellwerts vor dem Auswählen der m Abbildungen durchgeführt wird.

18. Verfahren nach einem der Ansprüche 11 bis 13, wobei das Auswählen einer Abbildung umfasst:

Überprüfen, ob eine betreffende Abbildung aus den n Abbildungen, die einer anderen Abbildung als die (m-1) Abbildungen entspricht, einen Semitransparenzwert aufweist, der gleich oder größer als der Schwellwert ist; und Auswählen der betreffenden Abbildung als letzte der m Speicherbilder, wenn die betreffende Abbildung einen Semitransparenzwert aufweist, der gleich oder größer als der Schwellwert ist.

19. Verfahren nach Anspruch 18, wobei der Schwellwert eine Multiplikation einer Differenz zwischen dem höchsten Wert und dem Semitransparenzwert der betreffenden Abbildung und dem Semitransparenzwert jedes der Speicherbilder ist, die bereits in den Abbildungspuffern gespeichert sind.

20. Verfahren nach Anspruch 18, wobei das Überprüfen weiterhin umfasst:

Bestimmen, ob der Semitransparenzwert der betreffenden Abbildung gleich oder größer als ein voreingestellter Wert ist; und Auswählen der betreffenden Abbildung als die letzte der m Speicherbilder, wenn die betreffende Abbildung einen Semitransparenzwert aufweist, der gleich oder größer als der voreingestellte Wert ist.

21. Ein Aufzeichnungsmedium, in dem ein Programm aufgezeichnet ist, das gestaltet ist, um alle Schritte des Verfahrens gemäß Anspruch 11 auszuführen.

22. Aufzeichnungsmedium nach Anspruch 21, wobei das Auswählen der (M-1) Abbildungen umfasst:

Speichern der m Speicherbilder in den m Abbildungspuffern in der Reihenfolge der Prioritätsniveaus.

23. Aufzeichnungsmedium nach Anspruch 22, wobei das Auswählen der (m-1) Abbildungen umfasst:

Vergleichen des Prioritätsniveaus eines der m Speicherbilder, das in einem ersten der m Abbildungspuffer gespeichert ist, mit dem Prioritätsniveau eines nächsten Speicherbildes mit einem zweiten Prioritätsniveau; Verschieben des einen Speicherbildes auf einen zweiten der m Abbildungspuffer, wenn das zweite Prioritätsniveau des nächsten Speicherbildes größer ist als das erste Prioritätsniveau; und Speichern der nächsten Abbildung mit dem zweiten Prioritätsniveau in den ersten Abbildungspuffer.

24. Aufzeichnungsmedium nach einem der Ansprüche 21 bis 23, das weiterhin umfasst:

Bestimmen des Schwellwerts, der der größte der Semitransparenzwerte einer vorbestimmten Anzahl von n Abbildungen ist.

25. Aufzeichnungsmedium nach Anspruch 24, wobei das Bestimmen des Schwellwertes vor dem Auswählen der m Abbildungen ausgeführt wird.

26. Aufzeichnungsmedium nach Anspruch 24, wobei das Bestimmen des Schwellwerts umfasst:

Bestimmen des Schwellwerts, wenn der Schwellwert gleich oder größer als ein voreingestellter Wert ist.

27. Aufzeichnungsmedium nach Anspruch 24, wobei das Bestimmen des Schwellwerts vor dem Auswählen der m Abbildungen durchgeführt wird.

28. Aufzeichnungsmedium nach einem der Ansprüche 21 bis 23, wobei das Auswählen eine Abbildung umfasst:

Überprüfen, ob eine betreffende Abbildung aus den n Abbildungen, die einer anderen Abbildung als die (m-1) Abbildungen entspricht, einen Semitransparenzwert aufweist, der gleich oder größer als der Schwellwert ist; und Auswählen der betreffenden Abbildung als letzte der m Speicherbilder, wenn die betreffende Abbildung einen Semitransparenzwert aufweist, der gleich oder größer als der Schwellwert ist.

29. Aufzeichnungsmedium nach Anspruch 28, wobei der Schwellwert eine Multiplikation einer Differenz zwischen dem höchsten Wert und dem Semitransparenzwert der betreffenden Abbildung und dem Semitransparenzwert jedes der Speicherbilder ist, die bereits in den Abbildungspuffern gespeichert sind.

30. Aufzeichnungsmedium nach Anspruch 28, wobei das Überprüfen weiterhin umfasst:

Bestimmen, ob der Semitransparenzwert der betreffenden Abbildung gleich oder größer als ein voreingestellter Wert ist; und Auswählen der betreffenden Abbildung als die letzte der m Speicherbilder, wenn die betreffende Abbildung einen Semitransparenzwert aufweist, der gleich oder größer als der voreingestellte Wert ist.

**Revendications**

1. Appareil de traitement de données graphiques comprenant :

m tampons d'images (B11, B12, B13), dans lequel m est un entier supérieur à 1, une unité d'affichage (B22) comprenant X points, une section de moteur de données graphiques (B3), qui fournit n images, n étant un entier supérieur à m, chaque image comprenant des données couleur pour une pluralité de points de l'unité d'affichage, une valeur de niveau de priorité, et une valeur de semi transparence, une section de sélection (B4 à B10, B25, B27 à B30) qui

- sélectionne (m-1) images de stockage comme (m-1) de m images de stockage avec la valeur de niveau de priorité supérieur jusqu'au (m-1)ième niveau de priorité supérieur parmi lesdites n images,
- sélectionne une mième image desdites m images de stockage parmi lesdites n images autres que lesdites (m-1) images, dans lequel ladite mième image est l'image avec la mième valeur de priorité supérieure, à moins que la valeur de semi transparence de l'image avec le (m+1) ième niveau de priorité supérieur soit au-dessus d'une valeur de seuil, auquel cas la mième image est l'image avec le (m+1) ième niveau de priorité supérieur,
- et enfin stocke les données couleur desdites m images de stockage dans lesdits m tampons d'images,

une section de commande d'affichage (B15, B16 à B24) qui extrait les données couleur desdites m images desdits m tampons d'images en unités de points pour produire une image d'affichage et commande ladite unité d'affichage de telle sorte que ladite image d'affichage soit affichée.

2. Appareil de traitement de données graphiques selon la revendication 1, dans lequel ladite section de sélection stocke lesdites m images de stockage dans lesdits m tampons d'images dans l'ordre desdits niveaux de priorité.

3. Appareil de traitement de données graphiques selon la revendication 2, dans lequel ladite section de sélection stocke une avec un premier niveau de priorité desdites m images de stockage dans un premier desdits m tampons d'images, et fait passer ladite une image de stockage dans un deuxième desdits m tampons d'images, puis stocke une suivante avec un deuxième niveau de priorité dans ledit premier tampon d'images, lorsque ladite image de stockage suivante est sélectionnée, ledit deuxième niveau de priorité étant supérieur au dit premier niveau de priorité.

4. Appareil de traitement de données graphiques selon l'une quelconque des revendications 1 à 3, dans lequel ladite section de sélection comprend :

une section de stockage de valeur de seuil (B25) qui stocke ladite valeur de seuil, ladite valeur de seuil étant la plus élevée desdites valeurs de semi transparence de celles pour un nombre prédéterminé desdites n images, et ladite section de sélection extrait ladite valeur de seuil de ladite section de stockage de valeur de seuil.

5. Appareil de traitement de données graphiques selon la revendication 4, comprenant en outre :

une section de détermination de valeur de seuil (B1) qui détermine ladite valeur de seuil avant ladite sélection par ladite section de sélection, et stocke la valeur de seuil déterminée dans ladite section de stockage de valeur de seuil.

6. Appareil de traitement de données graphiques selon la revendication 4, dans lequel ladite valeur de seuil est égale ou supérieure à une valeur prédéfinie.

7. Appareil de traitement de données graphiques selon la revendication 6, dans lequel ladite section de sélection comprend :

une section de détermination de valeur de seuil (B28 et B29) qui détermine ladite valeur de seuil avant ladite sélection par ladite section de sélection, et stocke la valeur de seuil déterminée dans ladite section de stockage de valeur de seuil.

8. Appareil de traitement de données graphiques selon l'une quelconque des revendications 1 à 3, dans lequel ladite section de sélection comprend :

une section de détermination qui détermine si une image concernée desdites n images autres que lesdites (m-1) images a une dite valeur de semi transparence égale ou supérieure à ladite valeur de seuil, et sélectionne ladite image concernée comme la dernière desdites m images de stockage lorsque ladite image concernée a une dite valeur de semi transparence égale ou supérieure à ladite valeur de seuil.

9. Appareil de traitement de données graphiques selon la revendication 8, dans lequel ladite valeur de seuil est une multiplication d'une différence entre la valeur la plus élevée et ladite valeur de semi transparence de ladite image concernée et de ladite valeur de semi transparence de chacune desdites images de stockage déjà stockées dans lesdits tampons d'images.

10. Appareil de traitement de données graphiques selon la revendication 8, dans lequel ladite section de détermination détermine en outre si ladite valeur de semi transparence de ladite image concernée est égale ou supérieure à une valeur prédéfinie, et sélectionne ladite image concernée comme la dernière desdites m images de stockage lorsque ladite image concernée a une dite valeur de semi transparence égale ou supérieure à ladite valeur prédéfinie.

11. Procédé permettant d'afficher une image d'affichage sur une unité d'affichage comprenant des points, dans lequel le procédé comprend les étapes consistant à :

recevoir n images, dans lequel n, m sont des entiers avec n étant supérieur à m, et m étant supérieur à 1, chaque image comprenant des données couleur pour une pluralité de points de l'unité d'affichage, une valeur de niveau de priorité, et une valeur de semi transparence, sélectionner (m-1) images de stockage comme (m-1) de m images de stockage avec la valeur de niveau de priorité supérieur jusqu'au (m-1) ième niveau de priorité supérieur parmi lesdites n images, pour les stocker dans (m-1) de m tampons d'images, sélectionner une mième image desdites m images de stockage parmi lesdites n images autre que lesdites (m-1) images, dans lequel ladite mième image est l'image avec la mième valeur de priorité supérieure, à moins que la valeur de semi transparence de l'image avec le (m+1) ième niveau de priorité supérieur soit au-dessus d'une valeur de seuil, auquel cas la mième image est l'image avec le (m+1) ième niveau de priorité supérieur, pour la stocker dans celui qui reste desdits m tampons d'images, stocker les données couleur desdites m images de stockage dans lesdits m tampons d'images, extraire les données couleur desdites m images desdits m tampons d'images en unités de points pour produire une image d'affichage, et commander ladite unité d'affichage de telle sorte que ladite image d'affichage soit affichée.

12. Procédé selon la revendication 11, dans lequel ladite sélection de (m-1) images comprend l'étape consistant à :

stocker lesdites m images de stockage dans lesdits m tampons d'images dans l'ordre desdits niveaux de priorité.

**13.** Procédé selon la revendication 12, dans lequel ladite sélection de (m-1) images comprend les étapes consistant à :

comparer ledit niveau de priorité de l'une avec un premier niveau de priorité desdites m images de stockage qui est stockée dans un premier desdits m tampons d'images et ledit niveau de priorité d'une suivante avec un deuxième niveau de priorité ;
faire passer ladite une image de stockage dans un deuxième desdits m tampons d'images lorsque ladite image de stockage suivante a un dit deuxième niveau de priorité supérieur au dit premier niveau de priorité ; et
stocker ladite image suivante avec ledit deuxième niveau de priorité dans ledit premier tampon d'images.

**14.** Procédé selon l'une quelconque des revendications 11 à 13, comprenant en outre l'étape consistant à :

déterminer ladite valeur de seuil qui est la plus élevée desdites valeurs de semi transparence de celles pour un nombre prédéterminé desdites n images.

**15.** Procédé selon la revendication 14, dans lequel ladite détermination de ladite valeur de seuil est réalisée avant ladite sélection desdites m images.

**16.** Procédé selon la revendication 14, dans lequel ladite détermination de ladite valeur de seuil comprend l'étape consistant à :

déterminer ladite valeur de seuil lorsque ladite valeur de seuil est égale ou supérieure à une valeur prédéfinie.

**17.** Procédé selon la revendication 14, dans lequel ladite détermination de ladite valeur de seuil est réalisée avant ladite sélection desdites m images.

**18.** Procédé selon l'une quelconque des revendications 11 à 13, dans lequel ladite sélection d'une image comprend les étapes consistant à :

vérifier si une image concernée desdites n images autres que lesdites (m-1) images a une dite valeur de semi transparence égale ou supérieure à ladite valeur de seuil ; et
sélectionner ladite image concernée comme la dernière desdites m images de stockage lorsque ladite image concernée a une dite valeur de semi transparence égale ou supérieure à ladite valeur de seuil.

**19.** Procédé selon la revendication 18, dans lequel ladite valeur de seuil est une multiplication d'une différence entre la valeur la plus élevée et ladite valeur de semi transparence de ladite image concernée et de ladite valeur de semi transparence de chacune desdites images de stockage déjà stockées dans lesdits tampons d'images.

**20.** Procédé selon la revendication 18, dans lequel ledit contrôle comprend en outre les étapes consistant à :

déterminer si ladite valeur de semi transparence de ladite image concernée est égale ou supérieure à une valeur prédéfinie ; et
sélectionner ladite image concernée comme la dernière desdites m images de stockage lorsque ladite image concernée a une dite valeur de semi transparence égale ou supérieure à ladite valeur prédéfinie.

**21.** Support d'enregistrement sur lequel un programme est enregistré qui est adapté pour exécuter toutes les étapes du procédé selon la revendication 11.

**22.** Support d'enregistrement selon la revendication 21, dans lequel ladite sélection des (m-1) images comprend l'étape consistant à :

stocker lesdites m images de stockage dans lesdits m tampons d'images dans l'ordre desdits niveaux de priorité.

**23.** Support d'enregistrement selon la revendication 22, dans lequel la sélection des (m-1) images comprend les étapes consistant à :

comparer ledit niveau de priorité de l'une avec un premier niveau de priorité desdites m images de stockage qui est stockée dans un premier desdits m tampons d'images et ledit niveau de priorité d'une suivante avec un deuxième niveau de priorité ;
faire passer ladite une image de stockage dans un deuxième desdits m tampons d'images lorsque ladite image de stockage suivante a un dit deuxième niveau de priorité supérieur au dit premier niveau de priorité ; et
stocker ladite image suivante avec ledit deuxième niveau de priorité dans ledit premier tampon d'images.

**24.** Support d'enregistrement selon l'une quelconque des revendications 21 à 23, comprenant en outre l'étape consistant à :

> déterminer ladite valeur de seuil qui est la plus élevée d'une desdites valeurs de semi transparence de celles pour un nombre prédéterminé desdites n images.

25. Support d'enregistrement selon la revendication 24, dans lequel ladite détermination de ladite valeur de seuil est réalisée avant ladite sélection desdites m images.

26. Support d'enregistrement selon la revendication 24, dans lequel ladite détermination de ladite valeur de seuil comprend l'étape consistant à :

> déterminer ladite valeur de seuil lorsque ladite valeur de seuil est égale ou supérieure à une valeur prédéfinie.

27. Support d'enregistrement selon la revendication 24, dans lequel ladite détermination de ladite valeur de seuil est réalisée avant ladite sélection desdites m images.

28. Support d'enregistrement selon l'une quelconque des revendications 21 à 23, dans lequel ladite sélection d'une image comprend les étapes consistant à :

> vérifier si une image concernée desdites n images autres que lesdites (m-1) images a une dite valeur de semi transparence égale ou supérieure à ladite valeur de seuil ; et
> sélectionner ladite image concernée comme la dernière desdites m images de stockage lorsque ladite image concernée a une dite valeur de semi transparence égale ou supérieure à ladite valeur de seuil.

29. Support d'enregistrement selon la revendication 28, dans lequel ladite valeur de seuil est une multiplication d'une différence entre la valeur la plus élevée et ladite valeur de semi transparence de ladite image concernée et de ladite valeur de semi transparence de chacune desdites images de stockage déjà stockées dans lesdits tampons d'images.

30. Support d'enregistrement selon la revendication 28, dans lequel ledit contrôle comprend en outre les étapes consistant à :

> déterminer si ladite valeur de semi transparence de ladite image concernée est égale ou supérieure à une valeur prédéfinie ; et
> sélectionner ladite image concernée comme la dernière desdites m images de stockage lorsque ladite image concernée a une dite valeur de semi transparence égale ou supérieure à ladite valeur prédéfinie.

# Fig. 1 PRIOR ART

```
( STORAGE PROCESS )
           │
           ▼
```

ST71

```
NO ◄── < PICTURE ELEMENT
         FOR IMAGE TO BE STORED:
               PRESENT? >
              │
             YES
              ▼
```

```
input inp_add;
input inp_yusen;
⇒ input inp_half;
input inp_palette;
active inp_WEB
```

ST72

```
┌──────────────────────────────┐
│      tmp = 0;                 │
│  tmp_yusen = inp_yusen;       │
│  tmp_half  = inp_half;        │
│  tmp_palette = inp_palette;   │
└──────────────────────────────┘
```

ST73

```
NO ◄── < tmp < max_men? >
              │
             YES
              ▼
```

ST74

```
       < tmp_yusen >
         yusen[tmp][inp_add]? >  ──NO──►
              │
             YES
```

ST75

```
┌──────────────────┐
│  tmp = tmp+1;    │
└──────────────────┘
```

ST76

```
┌───────────────────────────────────────────────┐
│       yusen = yusen[tmp][inp_add];             │
│        half = half[tmp][inp_add];              │
│     palette = palette[tmp][inp_add];           │
│  yusen[tmp][inp_add] = tmp_yusen;              │
│   half[tmp][inp_add] = tmp_half;               │
│ palette[tmp][inp_add] = tmp_palette            │
│      tmp_yusen = yusen;                         │
│       tmp_half = half;                          │
│    tmp_palette = palette;                       │
│           tmp = tmp+1;                          │
└───────────────────────────────────────────────┘
```

```
( RETURN )
```

Fig.2 PRIOR ART

# Fig. 3A
## PRIOR ART

Z1

0

Z AXIS

Z+

+

Z2

SEMI-TRANSPARENT
PERCENTAGE = $\beta$

+

Z3

SEMI-TRANSPARENT
PERCENTAGE = $\alpha$

# Fig. 3B
## PRIOR ART

Z4

Z1

P

Z2

Z3

EP 1 079 366 B1

# Fig. 4

# Fig. 5

```
(THRESHOLD VALUE PRODUCING PROCESS)

┌─────────────────────────────────────────────────┐
│ SETTING                                          │
│      MAX: NUMBER OF IMAGES TO BE DISPLAYED       │  X1
│ half[MAX]: SEMITRANSPARENT PERCENTAGE VALUE OF   │
│            IMAGE TO BE DISPLAYED                 │
│ shikiichi: THRESHOLD VALUE                       │
│      draw: NO. OF IMAGE PROCESSED CURRENTLY      │
└─────────────────────────────────────────────────┘

┌─────────────────────────────────────────────────┐
│              draw = 0;                           │  X2
│              shikiichi = 0;                      │
└─────────────────────────────────────────────────┘

          ◇ draw ≦ MAX? ◇   X3     NO → 
               │ YES

          ◇ 0.5 ≦ half[draw]? ◇   X4     YES →
               │ NO

          ◇ shikiichi ≠ 0.0? ◇   X5     NO →
               │ YES

          ◇ shikiichi ≦ half[draw]? ◇   X6     NO →
               │ YES

          ┌──────────────────────────┐
          │ shikiichi = half[draw]   │  X7
          └──────────────────────────┘

    ( END )                    ┌──────────────────────┐  X8
                               │ draw = draw + 1;     │
                               └──────────────────────┘
```

# Fig. 6

GRAPHICS PROCESS ———— ST1

SYSTEM RESET & SETTING OR DEFINITION OF RESPECTIVE VALUES
       shikiichi: THRESHOLD VALUE OF SEMI-TRANSPARENT PERCENTAGE VALUE
   Display_END: SIZE OF SCREEN IN X-AXIS DIRECTION
       max_men: MAXIMUM NUMBER OF PLANES WHICH CAN BE OVERLAPPED
            tmp: TEMPORAL VARIABLE TO COUNT NUMBER OF PLANES
       dotcount: TEMPORAL VARIABLE TO COUNT NUMBER OF DOTS
   palette[i][j]: PALETTE ADDRESS STORED IN IMAGE BUFFER
     yusen[i][j]: DISPLAY PRIORITY LEVEL STORED IN IMAGE BUFFER
       half[i][j]: SEMI-TRANSPARENT PERCENTAGE VALUE STORED IN IMAGE BUFFER
         inp_add: IMAGE BUFFER ADDRESS FOR IMAGE TO BE STORED
     inp_palette: PALETTE ADDRESS FOR IMAGE TO BE STORED
      inp_yusen: DISPLAY PRIORITY LEVEL STORED IN IMAGE BUFFER
        inp_half: SEMI-TRANSPARENT PERCENTAGE VALUE STORED IN IMAGE BUFFER
    tmp_palette: TEMPORAL VARIABLE TO STORE PALETTE ADDRESS
         palette: TEMPORAL VARIABLE TO STORE PALETTE ADDRESS
     tmp_yusen: TEMPORAL VARIABLE TO STORE DISPLAY PRIORITY LEVEL
           yusen: TEMPORAL VARIABLE TO STORE DISPLAY PRIORITY LEVEL
       tmp_half: TEMPORAL VARIABLE TO STORE
                 SEMI-TRANSPARENT PERCENTAGE VALUE
            half: TEMPORAL VARIABLE TO STORE
                 SEMI-TRANSPARENT PERCENTAGE VALUE
        outcolor: COLOR VALUE TO BE OUTPUTTED
               i: OPTIONAL VALUE
               j: OPTIONAL VALUE

SYNC SIGNAL: INPUTTED? ——— ST2   NO

YES

INITIALIZING PROCESS ——— ST3

STORAGE PROCESS ——— ST4

DISPLAY PROCESS ——— ST5

28

# F i g . 7

INITIALIZING PROCESS

ST31 — tmp = 0;
dotcount = 0;

ST32 — dotcount ≦ Display_END?

NO

YES

ST33 — tmp ≦ max_men?          YES          ST34

NO

palette[tmp][dotcount] = empty;
yusen[tmp][dotcount] = empty;
half[tmp][dotcount] = empty;

ST36 — dotcount = dotcount +1
tmp = 0;

tmp = tmp+1;

ST35

RETURN

# Fig. 8

STORAGE PROCESS

ST41 — PICTURE ELEMENT FOR IMAGE TO BE STORED: PRESENT?

```
input inp_add;
input inp_yusen;
⟹ input inp_half;
input inp_palette;
active inp_WEB
```

NO

YES

ST42
```
tmp = 0; tmp1 = 0;
tmp_yusen = inp_yusen;
tmp_half = inp_half;
tmp_palette = inp_palette;
```

ST43 — tmp1 > max_men?

YES

NO

ST44 — tmp_yusen > yusen[tmp][inp_add]?

NO → ST45
```
tmp = tmp+1
```

YES

ST46 — tmp1 = max_men?

NO

YES

ST47 — tmp_half ≧ shikiichi?

NO

YES

ST48
```
      yusen = yusen[tmp][inp_add];
       half = half[tmp][inp_add];
    palette = palette[tmp][inp_add];
 yusen[tmp][inp_add] = tmp_yusen;
  half[tmp][inp_add] = tmp_half;
palette[tmp][inp_add] = tmp_palette
        tmp_yusen = yusen;
        tmp_half = half;
      tmp_palette = palette;
      tmp = tmp+1; tmp1 = tmp1+1
```

RETURN

# Fig. 9

```
            DISPLAY PROCESS

            dotcount = 0          ST51

        dotcount < Display_END?   ST52
   NO                       YES

            tmp = max_men;         ST53
            out_color = color[0];

   outcolor = half[tmp][dotcount]*color[palette[tmp][dotcount]]   ST54
              +(1-half[tmp[dotcount])*color;
        tmp = tmp - 1;

   ST33                0 < tmp?    ST55   NO    ST56
                            YES

                                   output outcolor;
                                   dotcount = dotcount+1

   RETURN
```

EP 1 079 366 B1

Fig. 10B

Fig. 10A

Fig. 11

# Fig. 12

STORAGE PROCESS

ST61
PICTURE ELEMENT
FOR IMAGE TO BE STORED:
PRESENT?

NO

YES

```
input inp_add;
input inp_yusen;
⇒ input inp_half;
input inp_palette;
active inp_WEB
```

ST62
```
tmp = 0;
tmp_yusen = inp_yusen;
tmp_half = inp_half;
tmp_palette = inp_palette;
```

ST63
tmp < max_men?

NO

YES

ST64
tmp_yusen >
yusen[tmp][inp_add]?

NO

ST65
```
tmp = tmp+1
```

YES

ST66
tmp = max_men?

NO

YES

ST67
tmp_half ≧ 0.5?

NO

YES

ST68
tmp_half ≧
(1−tmp_half)*half[tmp][inp_add];?

NO

YES

ST69
```
yusen = yusen[tmp][inp_add];
half = half[tmp][inp_add];
palette = palette[tmp][inp_add];
yusen[tmp][inp_add] = tmp_yusen;
half[tmp][inp_add] = tmp_half;
palette[tmp][inp_add] = tmp_palette
tmp_yusen = yusen;
tmp_half = half;
tmp_palette = palette;
tmp = tmp+1
```

RETURN

F i g . 1 3

EP 1 079 366 B1

# Fig. 14A

# Fig. 14B